# EUROPEAN PATENT APPLICATION

(11) **EP 4 138 356 A1**
(43) Date of publication of application: **22.02.2023**
(21) Application number: 21787998.0
(22) Date of filing: 10.03.2021
(51) Int. Cl.: H04L 29/06, H04L 9/00

(54) **INTER-NODE PRIVACY COMMUNICATION METHOD AND NETWORK NODE**

(30) Priority: 17.04.2020 CN 202010305180
(71) Applicant: China Iwncomm Co., Ltd., Xi'an, Shaanxi 710075 (CN)
(72) Inventor: LI, Zhiyong, Xi'an, Shaanxi 710075 (CN); ZHANG, Guoqiang, Xi'an, Shaanxi 710075 (CN); JING, Jingtao, Xi'an, Shaanxi 710075 (CN); LI, Qin, Xi'an, Shaanxi 710075 (CN)
(74) Representative: Körfer, Thomas
(86) International application number: PCT/CN2021/079936
(87) International publication number: WO 2021/208644

(57) **Abstract**

An inter-node privacy communication method, comprising: a network node processing a data packet according to the role of the network node in a communication path of privacy communication between current nodes; if the node is a communication source node, acquiring, according to a node identifier in an identifier quadruple, a key for encryption, and then encrypting and sending the data packet; if the node is the first switching device in the communication path or the last switching device in the communication path, and an end-to-end privacy communication policy is valid, directly forwarding the data packet, and if said policy is not valid, first acquiring, according to a node identifier in an identifier quadruple, a key for decryption, and receiving and decrypting the data packet, and then acquiring, according to the node identifier in the identifier quadruple, a key for encryption, and then encrypting and sending the data packet; if the node is an intermediate switching device in the communication path, directly forwarding the data packet; and if the node is a communication destination node, acquiring, according to a node identifier in an identifier quadruple, a key for decryption, and then receiving and decrypting the data packet. Further disclosed is a network node.

## Description

### Cross reference to related applications

The present disclosure claims the priority of Chinese Patent Application No. 202010305180.X, filed to the China National Intellectual Property Administration on April 17, 2020 and entitled "Inter-Node Privacy Communication Method and Network Node", which is incorporated in its entirety herein by reference.

### Field

The present disclosure relates to the field of communication Internet, and in particular to an inter-node privacy communication method and a network node.

### Background

With the development of information technology, network security has become an issue of great concern. In the network, nodes communicate with each other. In order to avoid the leakage of transmitted data, it is necessary to use the key to encrypt and protect the transmitted data. Previously, the local area network (LAN) used end-to-end and hop-by-hop inter-node privacy communication methods to encrypt and protect the transmitted data. The end-to-end privacy communication method involves a large number of nodes due to the complexity of the LAN topology, and the nodes need to store a large number of keys established with the opposite-end nodes, which imposes high requirements on storage resources. The hop-by-hop privacy communication method brings a huge computational burden to a switch device and tends to cause the attacker's attack on the switch device because the switch device in the LAN needs to decrypt, encrypt and forward each received data packet. As a result, the two methods are not ideal in terms of security and transmission efficiency.

For the widely used LAN, a Tri-element Peer Architecture (TePA)-based LAN Security (TLSec) protocol is provided in the industry.

The TLSec protocol is a security solution in the national standard GB/T 15629.3-2014, which can provide authentication services, port-based access control services, privacy communication services, etc. for the LAN, thereby effectively ensuring the security of the LAN. The TLSec protocol uses a three-hop inter-node privacy communication method. Compared with the end-to-end privacy communication method, the three-hop inter-node privacy communication method does not need to establish a key pair for each end-to-end node, thereby greatly reducing the requirements for storage resources. Compared with the hop-by-hop privacy communication method, the three-hop inter-node privacy communication method involves the process of encryption and decryption operation, which only includes three data transmission segments at most: the source node and the first switch device, the first switch device and the last switch device, and the last switch device and the destination node, such that the computation loss is relatively lower. Therefore, the three-hop inter-node privacy communication method used by the TLSec protocol has greater advantages from the perspective of privacy communication methods.

The TLSec protocol mainly includes two sub-protocols: TePA-based LAN Authentication Protocol (TLA) and TLA-based LAN Privacy Protocol (TLP). The TLA sub-protocol ensures legal access between network nodes, and the TLP sub-protocol ensures privacy data communication between network nodes.

The TLA sub-protocol defines neighboring node discovery, security policy negotiation, authentication and unicast key management, multicast key announcement, station key establishment and switch key establishment methods.

After accessing the network, a new node obtains information of all neighboring nodes by means of a neighboring node discovery process, and also informs surrounding neighboring nodes of the information of the new node. Before the new node attempts to access the network or an existing node initiates re-access authentication, the new node or the node initiating re-access authentication acts as an access requester and a node having authentication access control function acts as an access authenticator. First, the negotiation about authentication, key suite and other security policies between the access requester and the access authenticator is achieved by means of a security policy negotiation process. After the security policy negotiation process is completed, the access requester and the access authenticator verify a network access legitimacy by means of an authentication and unicast key management process according to an authentication and key suite selected in the security policy negotiation process, which can verify the legitimacy of the access requester and the access network, and establish a security path between the neighboring nodes of the access requester and the access authenticator. Establishing the security path includes establishing a unicast key for two neighboring nodes of the access requester and the access authenticator. So far, the access requester has successfully accessed the wired LAN. After the access requester successfully accesses the network, a multicast key announcement process can complete providing a multicast key from the access authenticator to the access requester. Station key establishment establishes security paths for stations that need to establish a station key, which includes establishing the station key between the stations directly connected under the same switch device and also includes establishing the station key between neighboring stations. If a node type of the new node is station, the station key can be established between the new node and the station directly connected under the same switch device with the new node, or between the new node and its neighboring station, by means of the station key establishment process. Switch key establishment establishes a security path between any two of all switch devices in the LAN. If the new node is a switch device, the switch key will be established between the new node and all switch devices in the network.

Generally, the TLA sub-protocol ensures that the new node securely accesses the network, and moreover, after the new node securely accesses the network, it is ensured that a valid security path has been established between the neighboring nodes of the entire network and between any two switch devices, thereby providing necessary preconditions for the implementation of the TLP sub-protocol. So far, after the new node securely accesses to the network, there is a unicast key between neighboring nodes of the entire network and a switch key between any two switch devices. The TLP sub-protocol completes the node privacy communication on the basis of the unicast key and the switch key established by the TLA process. Although the establishment of the station key belongs to the TLA sub-protocol, the generation of the station key is triggered in the implementation process of the TLP sub-protocol. The station key is also configured for inter-node privacy communication according to the actual condition of network connection. Moreover, it also shows that the switch key between neighboring switch devices is essentially a unicast key between neighboring nodes.

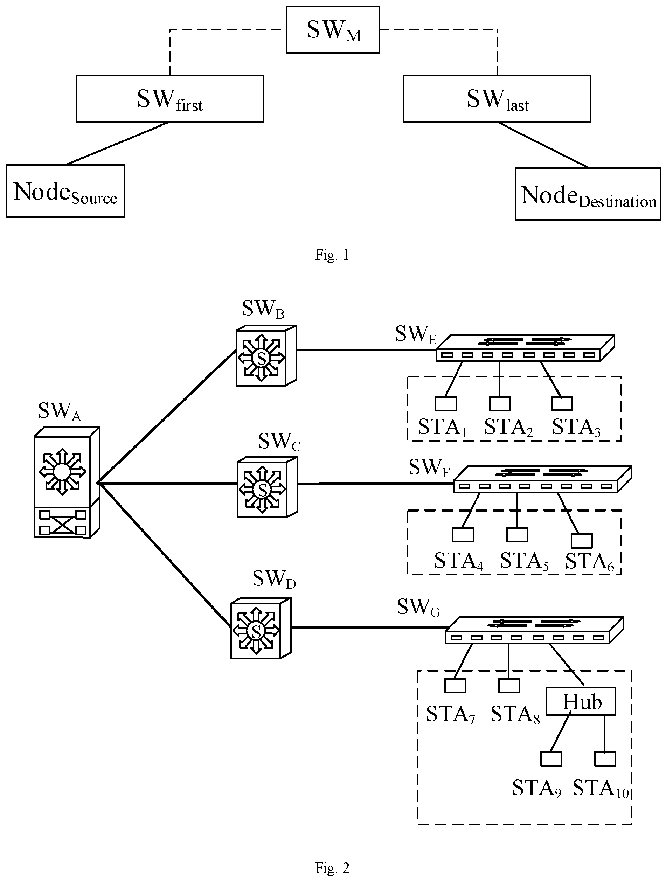

The TLP sub-protocol defines a three-hop inter-node privacy communication method, which specifically relates to an inter-node switching path searching method and an inter-node privacy communication method. The TLP sub-protocol defines inter-node switching path information from a communication source node Node_{Source} to a communication destination node Node_{Destination} as an identity quadruple, which can be specifically represented by [ID_{Source}, ID_{SW-first}, ID_{SW-last}, ID_{Destination}], where ID_{Source} represents the node identity of the communication source node Node_{Source}, ID_{SW-first} represents the node identity of the first switch device SW_{first} through which a data packet passes in a communication path from the communication source node to the communication destination node, ID_{SW-last} represents the node identity of the last switch device SWₗₐₛₜ through which a data packet passes in the communication path from the communication source node to the communication destination node, and ID_{Destination} represents the node identity of the communication destination node Node_{Destination}. The communication source node initiates a switching path searching request to obtain switching path information from the communication source node to the communication destination node. Fig. 1 describes a complete path structure of three-hop inter-node privacy communication. As shown in Fig. 1, a switch device that receives the data packet from the communication source node to the communication destination node but does not appear in the identity quadruple in the switching path information is called middle switch device, which is specifically recorded as SW_{M}. The data packet from the communication source node to the communication destination node possibly does not pass through the middle switch device SW_{M} in the transmission process, or possibly passes through multiple middle switch devices SW_{M}. In the communication path, only the network nodes whose node identities are in the identity quadruple in switching path information are in need of the encryption and decryption privacy communication processing of data packets, and the remaining network nodes, if any, only directly forward data packets.

It should also be noted that node types of the communication source node Node_{Source} and the communication destination node Node_{Destination} can be stations or switch devices. When the communication source node Node_{Source} is the switch device, the SW_{first} is the Node_{Source}; and when the communication destination node Node_{Destination} is the switch device, SWₗₐₛₜ is the Node_{Destination}.

The inter-node privacy communication includes data communication between any two nodes in the LAN. A basic framework of the LAN is shown in Fig. 2. There are unicast keys between all neighboring nodes, such as between neighboring switch devices SW_{A} and SW_{B}, between a neighboring switch device SW_{E} and a station STA₂; there are switch keys between any two switch devices, such as between neighboring switch devices SW_{B} and SW_{E}, and between non-neighboring switch devices SW_{E} and SW_{G}; station keys can be established between stations directly connected under the same switch device, such as between stations STA₁ and STA₂ and between stations STA₇ and STA₉; and station keys can be established between neighboring stations, such as between stations STA₉ and STA₁₀. The unicast key and the switch key are established when the node successfully accesses to the network, while the station key is established when communication occurs. It should be noted that if there is a key between any two nodes, there is only one pair of keys regardless of the key types.

According to the architecture and composition of the LAN, the inter-node privacy communication from the communication source node Node_{Source} to the communication destination node Node_{Destination} can be divided into the following 8 types according to a physical connection relation between nodes Node_{Source} and Node_{Destination} and the node types of the nodes, and the TLP sub-protocol defines the privacy communication policies corresponding to 8 communication types.

Type1: communication from the switch device to the switch device, which includes communication from the switch device to the neighboring switch device and communication from the switch device to the non-neighboring switch device, for example, data communication from SW_{A} to neighboring SW_{B} and SW_{E} to non-neighboring SW_{G} in Fig. 2.

Type 2: communication from the switch device and the station directly connected, for example, data communication from SW_{E} to STA₁ and SW_{G} to STA₇ in Fig. 2.

Type 3: communication from the switch device and the station that is not directly connected, for example, data communication from SW_{A} to STA₁ and SW_{D} to STA₆ in Fig. 2.

Type 4: communication from the station to the switch device directly connected, for example, data communication from STA₂ to SW_{E} and STA₅ to SW_{F} in Fig. 2.

Type 5: communication from the station and the switch device that is not directly connected, for example, data communication from STA₂ to SW_{F} and STA₅ to SW_{B} in Fig. 2.

Type 6: communication from the station to other stations directly connected under the same switch device, for example, data communication from STA₂ to STA₃ and STA₅ to STA₆ in Fig. 2.

Type 7: communication from the station and stations directly connected under different switch devices, for example, data communication from STA₂ to STA₆ and STA₅ to STA₉ in Fig. 2.

Type 8: communication between neighboring stations, for example, data communication from STA₉ to STA₁₀ in Fig. 2.

Privacy communication policies corresponding to these 8 communication types are as follows.

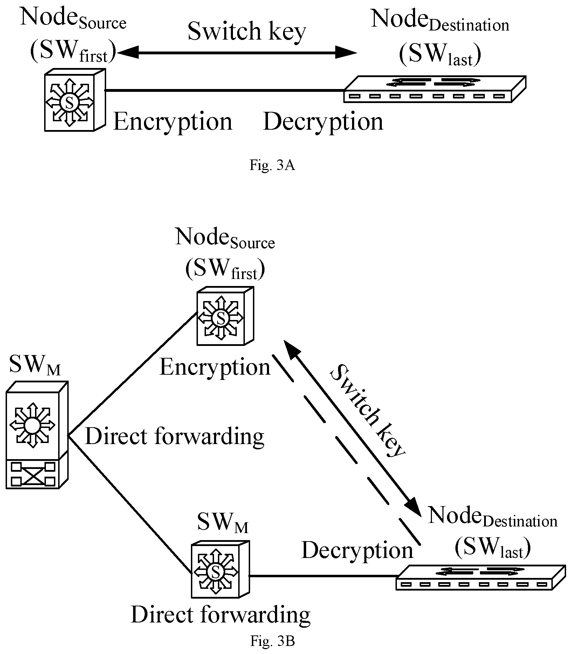

Type 1: communication policy from the switch device to the switch device, which is shown in Figs. 3A and 3B.

There are switch keys between any two switch devices in the network. The privacy communication policy configured for data communication of Type 1 is as follows:
a) the communication source node Node_{Source} (in this case taking as a switch device, and the communication source node Node_{Source} is also the first switch device SW_{first} at the same time) uses the switch key between the communication source node Node_{Source} and the communication destination node Node_{Destination} (in this case taking as a switch device, and the communication destination node Node_{Destination} is also the last switch device SWₗₐₛₜ at the same time) to encrypt the data packet;
b) if there is a middle switch device, the middle switch device receives the communication data packet of Type 1 and directly forwards the communication data packet; and
c) the communication destination node Node_{Destination} uses the switch key between the communication destination node Node_{Destination} and the communication source node Node_{Source} to decrypt the data packet.

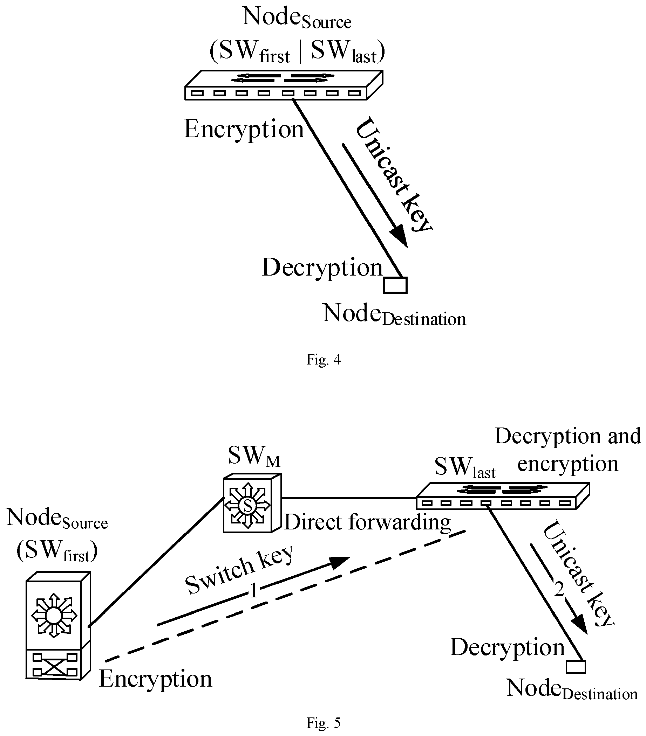

Type 2: communication policy from the switch device to the station directly connected, which is shown in Fig. 4.

There is a unicast key between the switch device and the station directly connected in the network. The privacy communication policy configured for data communication of Type 2 is as follows:
a) the communication source node Node_{Source} (in this case taking as a switch device, and the communication source node Node_{Source} is also the first switch device SW_{first} and the last switch device SWₗₐₛₜ at the same time) uses the unicast key between the communication source node Node_{Source} and the communication destination node Node_{Destination} (in this case, the communication destination node Node_{Destination} is the station) to encrypt the data packet; and
b) the communication destination node Node_{Destination} uses the unicast key between the communication destination node Node_{Destination} and the communication source node Node_{Source} to decrypt the data packet.

Type 3: communication policy from the switch device to the station that is not directly connected, which is shown in Fig. 5.

In the network, there are the unicast key between the switch device and the station directly connected, and the switch key between the switch devices. The privacy communication policy configured for data communication of Type 3 is as follows:
a) the communication source node Node_{Source} (in this case taking as a switch device, the communication source node Node_{Source} is also the first switch device SW_{first} at the same time) uses the switch key between the communication source node Node_{Source} and the last switch device SWₗₐₛₜ to encrypt the data packet;
b) if there is a middle switch device, the middle switch device directly forwards the data packet of Type 3;
c) the last switch device SWₗₐₛₜ uses the switch key between the last switch device SWₗₐₛₜ and the communication source node Node_{Source} to decrypt the data packet, then uses the unicast key between the last switch device SWₗₐₛₜ and the communication destination node Node_{Destination} (in this case, the communication destination node Node_{Destination} is the station) to encrypt the data packet, and forwards the data packet; and
d) the communication destination node Node_{Destination} uses the unicast key between the communication destination node Node_{Destination} and the last switch device SWₗₐₛₜ to decrypt the data packet.

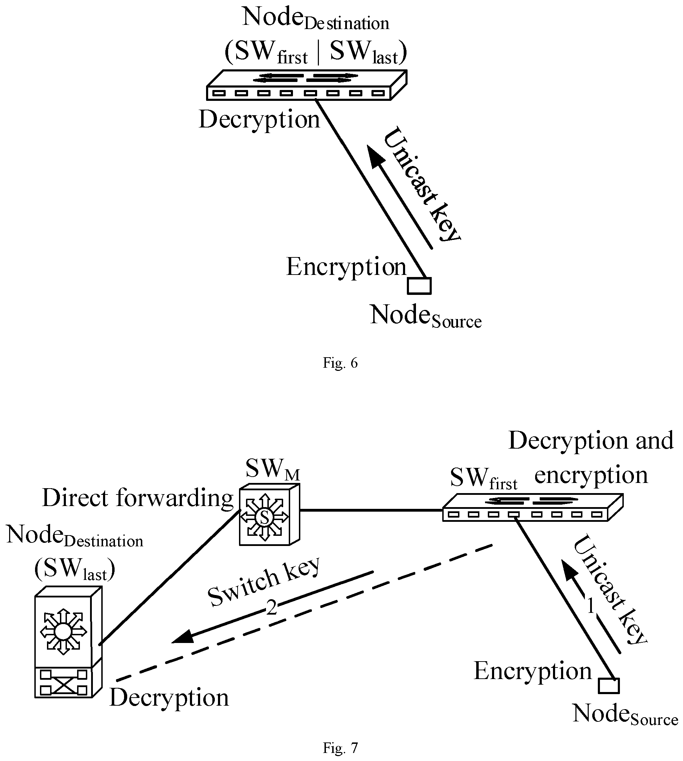

Type 4: communication policy from the station to the switch device directly connected, which is shown in Fig. 6.

There is the unicast key between the station and the switch device directly connected in the network. The privacy communication policy configured for data communication of Type 4 is as follows:
a) the communication source node Node_{Source} (in this case, the communication source node Node_{Source} is the station) uses the unicast key between the communication source node Node_{Source} and the communication destination node Node_{Destination} (in this case taking as a switch device, the communication destination node Node_{Destination} is also the first switch device SW_{first} and the last switch device SWₗₐₛₜ at the same time) to encrypt the data packet; and
b) the communication destination node Node_{Destination} uses the unicast key between the communication destination node Node_{Destination} and the communication source node Node_{Source} to decrypt the data packet.

Type 5: communication policy from the station to the switch device that is not directly connected, which is shown in Fig. 7.

In the network, there are the unicast key between the station and the switch device directly connected, and the switch key between the switch devices. The privacy communication policy configured for data communication of Type 5 is as follows:
a) the communication source node Node_{Source} (in this case, the communication source node Node_{Source} is the station) uses the unicast key between the communication source node Node_{Source} and the first switch device SW_{first} to encrypt the data packet;
b) the first switch device SW_{first} uses the unicast key between the first switch device SW_{first} and the communication source node Node_{Source} to decrypt the data packet, then uses the switch key between the first switch device SW_{first} and the communication destination node Node_{Destination} (in this case taking as a switch device, the communication destination node Node_{Destination} is also the last switch device SWₗₐₛₜ at the same time) to encrypt the data packet, and forwards the data packet;
c) if there is a middle switch device, the middle switch device directly forwards the data packet of Type 5; and
d) the communication destination node Node_{Destination} uses the switch key between the communication destination node Node_{Destination} and the first switch device SW_{first} to decrypt the data packet.

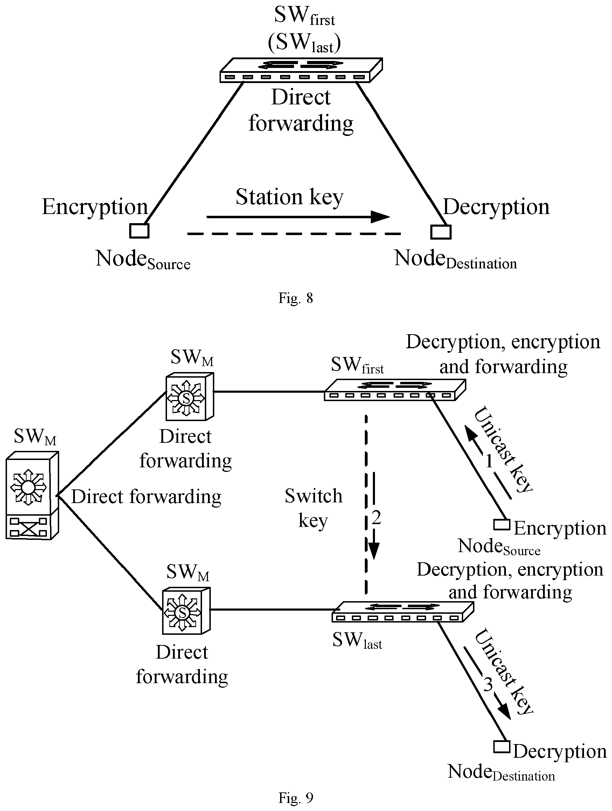

Type 6: communication policy from the station and other stations directly connected under the same switch device, which is shown in Fig. 8.

In the network, there is the unicast key between the station and the switch device directly connected, and the station key can be established between the stations directly connected under the same switch device. The privacy communication policy configured for data communication of Type 6 is as follows:
a) the communication source node Node_{Source} (in this case, the communication source node Node_{Source} is the station) uses the station key between the communication source node Node_{Source} and the communication destination node Node_{Destination} (in this case, the communication destination node Node_{Destination} is the station) to encrypt the data packet;
b) the first switch device SW_{first} (in this case, the first switch device SW_{first} is the last switch device SWₗₐₛₜ at the same time) directly forwards the data packet of Type 6; and
c) the communication destination node Node_{Destination} uses the station key between the communication destination node Node_{Destination} and the communication source node Node_{Source} to decrypt the data packet.

Type 7: communication policy from the station to stations directly connected under different switch devices, which is shown in Fig. 9.

In the network, there is the unicast key between the station and the switch device directly connected, and the switch key between the switch devices. The privacy communication policy configured for data communication of Type 7 is as follows:
a) the communication source node Node_{Source} (in this case, the communication source node Node_{Source} is the station) uses the unicast key between the communication source node Node_{Source} and the first switch device SW_{first} to encrypt the data packet;
b) the first switch device SW_{first} uses the unicast key between the first switch device SW_{first} and the communication source node Node_{Source} to decrypt the data packet, then uses the switch key between the first switch device SW_{first} and the last switch device SWₗₐₛₜ to encrypt the data packet, and forwards the data packet;
c) if there is a middle switch device, the middle switch device directly forwards the data packet of Type 7;
d) the last switch device SWₗₐₛₜ uses the switch key between the last switch device SWₗₐₛₜ and the first switch device SW_{first} to decrypt the data packet, then uses the unicast key between the last switch device SWₗₐₛₜ and the communication destination node Node_{Destination} (in this case, the communication destination node Node_{Destination} is the station) to encrypt the data packet, and forwards the data packet; and
e) the communication destination node Node_{Destination} uses the unicast key between the communication destination node Node_{Destination} and the last switch device SWₗₐₛₜ to decrypt the data packet.

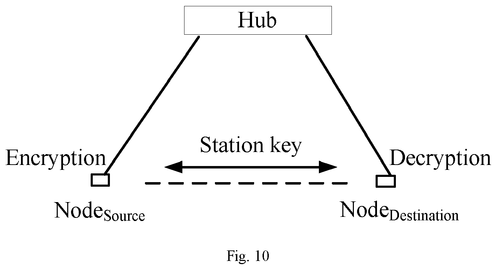

Type 8: communication policy between neighboring stations, which is shown in Fig. 10.

The station key can be established between the neighboring stations in the network. The privacy communication policy configured for data communication of Type 8 is as follows:
a) the communication source node Node_{Source} (in this case, the communication source node is the station) uses the station key between the communication source node Node_{Source} and the communication destination node Node_{Destination} (in this case, the communication destination node Node_{Destination} is the station) to encrypt the data packet; and
b) the communication destination node Node_{Destination} uses the station key between the communication destination node Node_{Destination} and the communication source node Node_{Source} to decrypt the data packet.

It should also be noted that the TLP sub-protocol defines an encapsulation format of the data packet. For communication Type 6 and Type 8, the identity quadruple in the switching path information in the data packet only includes the identity information ID_{Source} and ID_{Destination}, the privacy communication policy is configured as the end-to-end privacy communication policy, other communication types includes all the identity information of the identity quadruple [ID_{Source}, ID_{SW-first}, ID_{SW-last}, ID_{Destination}] in the switching path information, and the privacy communication policy is configured as a three-hop privacy communication policy. Generally, the identity of the privacy communication policy carried in the data packet can be used to indicate which privacy communication policy is enabled, and the identity of the privacy communication policy can be represented by the Encrypt Policy field. The network node in the communication path can extract the identity quadruple in the switching path information from the data packet.

In the existing inter-node privacy communication processing method, the communication source node firstly obtains the identity quadruple in the switching path information from the communication source node to the communication destination node by means of the switching path searching process, then determines the communication types according to the identity quadruple information, and implements the corresponding privacy communication policies according to the determined communication types to complete privacy communication. The communication types are determined by means of the identity quadruple in the switching path information as follows.
a) If ID_{SW-first} and ID_{SW-last} are both F, the communication type is Type 8, and otherwise, whether ID_{SW-first}=ID_{Source} is determined; if ID_{SW-first}=ID_{Source}, the communication source node Node_{Source} is the switch device, and step b) is executed; and if ID_{SW-first}≠ID_{Source}, the communication source node Node_{Source} is the station, and step d) is executed.
b) whether ID_{SW-last}=ID_{Destination} is determined; if ID_{SW-last}=ID_{Destination}, the communication destination node Node_{Destination} is the switch device, data communication from the communication source node Node_{Source} to the communication destination node Node_{Destination} is communication from the switch device to the switch device, and the communication type is Type 1; and If ID_{SW-last}≠ID_{Destination}, the communication destination node Node_{Destination} is the station, and step c) is executed.
c) Whether ID_{SW-last}=ID_{SW-first} is determined; if ID_{SW-last}=ID_{SW-first}, the data from the communication source node Node_{Source} to the communication destination node Node_{Destination} only passes through one switch device, and the data communication from the communication source node Node_{Source} to the communication destination node Node_{Destination} is communication from the switch device to the station directly connected, which belongs to type 2; and if ID_{SW-last}≠ID_{SW-first}, the data from the communication source node Node_{Source} to the communication destination node Node_{Destination} passes through more than two switch devices, and the data communication from the communication source node Node_{Source} to the communication destination node Node_{Destination} is communication from the switch device to the station that is not directly connected, which belongs to type 3.
d) Whether ID_{SW-last}=ID_{Destination} is determined; if ID_{SW-last}=ID_{Destination}, the communication destination node Node_{Destination} is the switch device, and step c) is executed; and if ID_{SW-last}≠ID_{Destination}, the communication destination node Node_{Destination} is the station, and step f) is executed.
e) Whether ID_{SW-last}=ID_{SW-first} is determined; if ID_{SW-last}=ID_{SW-first}, the data from the communication source node Node_{Source} to the communication destination node Node_{Destination} only passes through one switch device, the data communication from the communication source node Node_{Source} to the communication destination node Node_{Destination} is communication from the station to the switch device directly connected, and the communication type is Type 4; and if ID_{SW-last}≠ID_{SW-first}, the data from the communication source node Node_{Source} to the communication destination node Node_{Destination} passes through more than two switch devices, the data communication from the communication source node Node_{Source} to the communication destination node Node_{Destination} is communication from the station to the switch device that is not directly connected, and the communication type is Type 5.
f) Whether ID_{SW-last}=ID_{SW-first} is determined; if ID_{SW-last}=ID_{SW-first}, the data from the communication source node Node_{Source} to the communication destination node Node_{Destination} only passes through one switch device, the data communication from the communication source node Node_{Source} to the communication destination node Node_{Destination} is communication from the station to other stations directly connected under the same switch device, and the communication type is Type 6; and if ID_{SW-last}≠ID_{SW-first}, the data from the communication source node Node_{Source} to the communication destination node Node_{Destination} passes through more than two switch devices, the data communication from the communication source node Node_{Source} to the communication destination node Node_{Destination} is communication from the station to the stations directly connected under different switch devices, and the communication type is Type 7.

Thus, it can be seen that in the existing inter-node privacy communication method, the communication source node determines the communication types by means of a complex determination flow, and different communication types correspond to different privacy communication policies. Further, the use of different key types is involved, which increases the complexity of the flow and is inconducive to the communication efficiency.

### Summary

In view of the above, the present disclosure provides an inter-node privacy communication method, which takes a node identity as index to store a key, determines a corresponding privacy communication policy on the basis of a communication path role of a node, and queries the key directly according to node identities in an identity quadruple in switching path information when the node needs encryption or decryption, such that each node uses a unified flow to complete privacy communication. By using the method, it is unnecessary to determine node types, communication types and key types of the network node, thereby simplifying existing inter-node privacy communication, and improving communication efficiency. Correspondingly, the present disclosure further provides a network node.

A first aspect of the present disclosure provides an inter-node privacy communication method. Communication path roles of inter-node privacy communication include a communication source node, a first switch device of communication path, a middle switch device of communication path, a last switch device of communication path, and a communication destination node, any network node in a network establishes a key with an opposite-end network node and takes a node identity of the opposite-end network node as index to store the key.

The privacy communication method is configured for a transmission node and includes: when the communication path role of a node in current inter-node privacy communication is the communication source node, obtaining a key for encryption according to node identities in an identity quadruple, and encrypting and transmitting a data packet; when the communication path role of the node in the current inter-node privacy communication is the first switch device of communication path or the last switch device of communication path and an end-to-end privacy communication policy is valid, directly transmitting a data packet to be transmitted; when the communication path role of the node in the current inter-node privacy communication is the first switch device of communication path or the last switch device of communication path and the end-to-end privacy communication policy is invalid, obtaining the key for encryption according to the node identities in the identity quadruple, and encrypting and transmitting the data packet; and when the communication path role of the node in the current inter-node privacy communication is the middle switch device of communication path, directly transmitting the data packet to be transmitted. The communication path role of the transmission node in the current inter-node privacy communication is determined according to the node identity of the transmission node, and the identity quadruple is determined according to inter-node switching path information.

A second aspect of the present disclosure provides an inter-node privacy communication method. Communication path roles of inter-node privacy communication include a communication source node, a first switch device of communication path, a middle switch device of communication path, a last switch device of communication path, and a communication destination node, any network node in a network establishes a key with an opposite-end network node and takes a node identity of the opposite-end network node as index to store the key.

The privacy communication method is configured for a reception node and includes: when the communication path role of the node in current inter-node privacy communication is the communication destination node, obtaining a key for decryption according to node identities in an identity quadruple, and receiving and decrypting a data packet; when the communication path role of the node in the current inter-node privacy communication is the last switch device of communication path or the first switch device of communication path and an end-to-end privacy communication policy is valid, directly receiving a data packet to be received; when the communication path role of the node in the current inter-node privacy communication is the last switch device of communication path or the first switch device of communication path and the end-to-end privacy communication policy is invalid, obtaining the key for decryption according to the node identities in the identity quadruple, and receiving and decrypting the data packet; and when the communication path role of the node in the current inter-node privacy communication is the middle switch device of communication path, directly receiving the data packet to be received; where the communication path role of the reception node in the current inter-node privacy communication is determined according to the node identity of the reception node, and the identity quadruple is determined according to inter-node switching path information.

A third aspect of the present disclosure provides an inter-node privacy communication method. Communication path roles of inter-node privacy communication include a communication source node, a first switch device of communication path, a middle switch device of communication path, a last switch device of communication path, and a communication destination node, any network node in a network establishes a key with an opposite-end network node and takes a node identity of the opposite-end network node as index to store the key.

The privacy communication method includes: when the communication path role of a node in current inter-node privacy communication is the communication source node, obtaining a key for encryption according to node identities in an identity quadruple, and encrypting and transmitting a data packet; when the communication path role of the node in current inter-node privacy communication is the communication destination node, obtaining a key for decryption according to the node identities in the identity quadruple, and receiving and decrypting the data packet; when the communication path role of the node in the current inter-node privacy communication is the first switch device of communication path or the last switch device of communication path and an end-to-end privacy communication policy is valid, directly forwarding the data packet; when the communication path role of the node in the current inter-node privacy communication is the first switch device of communication path or the last switch device of communication path and the end-to-end privacy communication policy is invalid, obtaining the key for decryption according to the node identities in the identity quadruple, receiving and decrypting the data packet, and then obtaining the key for encryption according to the node identities in the identity quadruple, and encrypting and transmitting the data packet; and when the communication path role of the node in the current inter-node privacy communication is the middle switch device of communication path, directly forwarding the data packet; where the communication path role of the node in the current inter-node privacy communication is determined according to the node identity of the node, and the identity quadruple is determined according to inter-node switching path information.

A fourth aspect of the present disclosure provides a network node. The network node is configured for a station and includes: a storage module configured for, after a key between the network node and an opposite-end network node is established, taking a node identity of the opposite-end network node as index to store the key, where the node further includes: an encryption module configured for obtaining a key for encryption according to node identities in an identity quadruple and encrypting a data packet when a communication path role of the node in current inter-node privacy communication is a communication source node, the communication path role being determined according to the node identity of the node, and the identity quadruple being determined according to inter-node switching path information; a transmission module configured for transmitting an encrypted data packet; and/or, a reception module configured for receiving the data packet; and a decryption module configured for obtaining a key for decryption according to the node identities in the identity quadruple and decrypting the data packet when the communication path role of the node in the current inter-node privacy communication is a communication destination node.

A fifth aspect of the present disclosure provides a network node. The network node is configured for a switch device and includes: a storage module configured for, after a key between the network node and an opposite-end network node is established, taking a node identity of the opposite-end network node as index to store the key, where the node further includes: an encryption module configured for obtaining a key for encryption according to node identities in an identity quadruple and encrypting a data packet when a communication path role of the node in current inter-node privacy communication is a first switch device of communication path or a last switch device of communication path and an end-to-end privacy communication policy is invalid, the communication path role being determined according to the node identity of the node, and the identity quadruple being determined according to inter-node switching path information; a transmission module configured for transmitting an encrypted data packet when the communication path role of the node in the current inter-node privacy communication is the first switch device of communication path or the last switch device of communication path and the end-to-end privacy communication policy is invalid; directly transmitting a data packet to be transmitted when the communication path role of the node in the current inter-node privacy communication is the first switch device of communication path or the last switch device of communication path and the end-to-end privacy communication policy is valid; and directly transmitting the data packet to be transmitted when the communication path role of the node in the current inter-node privacy communication is a middle switch device of communication path; and/or, a reception module configured for directly receiving a data packet to be received when the communication path role of the node in the current inter-node privacy communication is the last switch device of communication path or the first switch device of communication path and the end-to-end privacy communication policy is valid; receiving a data packet when the communication path role of the node in the current inter-node privacy communication is the last switch device of communication path or the first switch device of communication path and the end-to-end privacy communication policy is invalid; and directly receiving the data packet to be received when the communication path role of the node in the current inter-node privacy communication is the middle switch device of communication path; and a decryption module configured for obtaining a key for decryption according to the node identities in the identity quadruple and decrypting the data packet when the communication path role of the node in the current inter-node privacy communication is the last switch device of communication path or the first switch device of communication path and the end-to-end privacy communication policy is invalid.

Thus, it may be seen that the method determines the communication path role of the node on the basis of the node identity, and determines a processing mode of the node on the basis of the communication path role of the node, such that each node uses a unified flow to complete an entire process of privacy communication, and it is unnecessary to determine communication types, thereby reducing complexity of the flow, and improving inter-node privacy communication efficiency. In addition, the method takes the node identity as the index to store the key, and a corresponding key searching method is configured according to the communication path role of the node, such that the key may be queried only according to the node identity when the key is to be queried, and it is unnecessary to determine the inter-node key types, thereby improving key searching efficiency, and further improving inter-node privacy communication efficiency.

Further, a device manufactured according to the inter-node privacy communication method provided by the present disclosure has excellent compatibility, and may be compatible with a device manufactured according to the TePA-based LAN Security (TLSec) protocol. For example, when a transmitter is the device manufactured according to the above method provided by the present disclosure, a receiver may be the device manufactured according to the above method provided by the present disclosure or the device manufactured on the basis of the TLSec protocol. By the same reasoning, when a receiver is the device manufactured according to the above method provided by the present disclosure, a transmitter may be the device manufactured according to the above method provided by the present disclosure or the device manufactured on the basis of the TLSec protocol.

### Brief Description of the Drawings

Fig. 1 is a schematic diagram of a network structure corresponding to interactive path information in an embodiment of the present disclosure.
Fig. 2 is a schematic diagram of a basic framework of a local area network.
Fig. 3A is a schematic diagram of communication from a neighboring switch device to a switch device.
Fig. 3B is a schematic diagram of communication from a non-neighboring switch device to a switch device.
Fig. 4 is a schematic diagram of communication from a switch device to a station directly connected.
Fig. 5 is a schematic diagram of communication from a switch device to a station that is not directly connected.
Fig. 6 is a schematic diagram of communication from a station to a switch device directly connected.
Fig. 7 is a schematic diagram of communication from a station to a switch device that is not directly connected.
Fig. 8 is a schematic diagram of communication from a station to other stations directly connected under the same switch device.
Fig. 9 is a schematic diagram of communication from a station to a station directly connected under different switch devices.
Fig. 10 is a schematic diagram of communication between neighboring stations.
Fig. 11A is a flow chart of an inter-node privacy communication method in an embodiment of the present disclosure.
Fig. 11B is a flow chart of an inter-node privacy communication method in an embodiment of the present disclosure.
Fig. 12 is a schematic diagram of a network structure in which a source node and a destination node are stations directly connected under the same switch device in an embodiment of the present disclosure.
Fig. 13A is a flow chart of an inter-node privacy communication method in an embodiment of the present disclosure.
Fig. 13B is a flow chart of an inter-node privacy communication method in an embodiment of the present disclosure.
Fig. 14A is a flow chart of an inter-node privacy communication method in an embodiment of the present disclosure.
Fig. 14B is a flow chart of an inter-node privacy communication method in an embodiment of the present disclosure.
Fig. 15 is a schematic diagram of an application scene of an inter-node privacy communication method in an embodiment of the present disclosure.
Fig. 16 is a structural schematic diagram of a network node in an embodiment of the present disclosure.
Fig. 17 is a structural schematic diagram of a network node in an embodiment of the present disclosure.

### Detailed Description of the Embodiments

For any network node, such as a communication source node, a communication destination node, a first switch device, a last switch device, or a middle switch device of communication path, a node identity of the network node may be any identity that can uniquely identify the network node.

In a specific implementation, the node identity may be a Medium Access Control (MAC) address of the node. In other possible implementations of embodiments of the present disclosure, the node identity may further be a serial number of the node in a communication network, a randomly generated Universally Unique Identifier (UUID), etc. Hereinafter, ID is taken as the node identity for exemplary illustration and does not constitute a limitation to the technical solution of the present disclosure.

However, for implementation of the three-hop inter-node privacy communication method mentioned in the Background, the implementation method of the three-hop inter-node privacy communication method is based on multiple determination processes such as communication type determination and node type determination, so that a determination process of the implementation method is complex, thereby affecting execution efficiency, and a station and a switch device do not have a unified execution flow, thereby greatly affecting practical application of the three-hop inter-node privacy communication method.

Therefore, the present disclosure provides an optimization implementation method for a three-hop inter-node privacy communication method. The method does not distinguish inter-node key types, but takes node identities as indexes to store inter-node keys, determines a communication path role of the node in current inter-node privacy communication by comparing the node identities, and determines a corresponding privacy communication policy on the basis of the communication path role.

For any pair of network nodes that establish a key in the network, each node takes a node identity of an opposite-end node as index to store the key. For example, neighboring nodes establish a unicast key, every two switch devices establish a switch key, and stations establish a station key. The stored keys do not have to distinguish key types of the keys, and each key is stored only by taking the node identity of the opposite-end node as the index.

According to definition of an inter-node switching path in a sub-protocol TLA-based LAN Privacy Protocol (TLP), the inter-node switching path from the communication source node to the communication destination node includes five communication path roles, i.e., the communication source node, the first switch device of communication path, the middle switch device of communication path and the last switch device of communication path and the communication destination node.

In an actual communication process, two communication path roles of the communication source node and the communication destination node are inevitably present, and three communication path roles of the first switch device of communication path, the middle switch device of communication path and the last switch device of communication path may all be present, all may not be present, or may part of them be present.

An inter-node switching path information identity quadruple [ID_{Source}, ID_{SW-first}, ID_{SW-last} and ID_{Destination}] is obtained by means of an inter-node switching path searching process, and ID identities in the identity quadruple indicates communication path roles of the communication source node, the first switch device of communication path, the last switch device of communication path and the communication destination node respectively, and the ID identities are node identities of corresponding network nodes located in the communication path respectively.

Therefore, for the network node, after the network node receives a data packet, the network node firstly determines a communication path role of the network node in a current inter-node privacy communication process according to identity quadruple information carried in the data packet. According to 8 communication types determined according to a framework and composition of a local area network, when the communication path role of the network node in the current inter-node privacy communication process is the communication source node, a next switching node of the network node is the first switch device in communication Type 5 and Type 7, the next switching node of the network node is the last switch device in communication Type 3, and the next switching node of the network node is the communication destination node in communication Type 1, Type 2, Type 4, Type 6 and Type 8; when the communication path role of the network node in current inter-node privacy communication process is the first switch device of communication path, a previous switching node of the network node is the communication source node and the next switching node of the network node is the communication destination node in communication Type 5, and the previous switching node of the network node is the communication source node and the next switching node of the network node is the last switch device in communication Type 7; when the communication path role of the network node in the current inter-node privacy communication process is the last switch device of communication path, the previous switching node of the network node is the communication source node and the next switching node of the network node is the communication destination node in communication Type 3, and the previous switching node of the network node is the first switch device, and the next switching node is the communication destination node in communication Type 7; when the communication path role of the network node in the current inter-node privacy communication process is the communication destination node, the previous switching node of the network node is the communication source node in communication Type 1, Type 2, Type 4, Type 6 and Type 8, the previous switching node of the network node is the last switch device in communication Type 3 and Type 7, and the previous switching node of the network node is the first switch device in communication Type 5; and when the communication path role of the network node in the current inter-node privacy communication process is the middle switch device of communication path, the data packet is directly forwarded. It should be noted that when the communication source node is the switch device, the communication path role of the switch device is the communication source node, and when the communication destination node is the switch device, the communication path role of the switch device is the communication destination node.

When the network node decrypts the data packet encrypted by the previous switching node, the network node queries the key stored in the network node by taking a node identity of the previous switching node as index and decrypts the data packet; and when the network node encrypts the data packet to be decrypted by the next switching node, the network node queries the key stored in the network node by taking a node identity of the next switching node as index and encrypts the data packet. The switching nodes are network nodes whose node identities are located in the switching path information identity quadruple.

Specifically, any network node in the network establishes a key with an opposite-end network node and takes a node identity of the opposite-end network node as index to store the key. When the communication path role of the node in current inter-node privacy communication is the communication source node, a key for encryption is obtained according to the node identities in the identity quadruple, and a data packet is encrypted and transmitted; when the communication path role of the node in the current inter-node privacy communication is the first switch device of communication path or the last switch device of communication path and an end-to-end privacy communication policy is valid, the data packet is directly forwarded; when the communication path role of the node in the current inter-node privacy communication is the first switch device of communication path or the last switch device of communication path and the end-to-end privacy communication policy is invalid, a key for decryption is obtained according to the node identities in the identity quadruple, the data packet is received and decrypted, then the key for encryption is obtained according to the node identities in the identity quadruple, and the data packet is encrypted and transmitted; when the communication path role of the node in the current inter-node privacy communication is the middle switch device of communication path, the data packet is directly forwarded; and when the communication path role of the node in the current inter-node privacy communication is the communication destination node, the key for decryption is obtained according to the node identities in the identity quadruple, and the data packet is received and decrypted, thereby achieving privacy communication between the communication source node and the communication destination node.

Thus, each node uses a unified flow to complete an entire process of privacy communication, and it is unnecessary to determine communication types, thereby reducing complexity of the flow, and improving inter-node privacy communication efficiency. Moreover, the method takes the node identity as the index to store the key, and a corresponding key searching method is configured according to the communication path role of the node. Thus, the key may be queried only according to the node identity when the key is to be queried, and it is unnecessary to determine the inter-node key types, thereby improving key searching efficiency, and further improving inter-node privacy communication efficiency.

Specifically, in a case that the communication path role of the node in current inter-node privacy communication is the communication source node, the obtaining a key for encryption according to node identities in an identity quadruple includes: sequentially determine, in the sequence of the communication destination node, the last switch device and the first switch device in the identity quadruple or the sequence of the communication destination node, the first switch device and the last switch device in the identity quadruple, whether the node stores a key taking one of the node identities of the above nodes in the identity quadruple as index.

In a case that the communication path role of the node in the current inter-node privacy communication is the communication destination node, the obtaining a key for decryption according to the node identities in the identity quadruple includes: sequentially determine, in the sequence of the communication source node, the first switch device and the last switch device or the sequence of the communication source node, the last switch device and the first switch device in the identity quadruple, whether the node stores a key taking one of the node identities of the above nodes in the identity quadruple as index.

In a case that the communication path role of the node in the current inter-node privacy communication is the last switch device of communication path, the obtaining a key for decryption according to the node identities in the identity quadruple includes: sequentially determine, in the sequence of the communication source node and the first switch device or the sequence of the first switch device and the communication source node in the identity quadruple, whether the node stores a key taking one of the node identities of the above nodes in the identity quadruple as index; the obtaining a key for encryption according to the node identities in the identity quadruple includes: determine whether the node stores a key taking the node identity of the communication destination node in the identity quadruple as index.

In a case that the communication path role of the node in the current inter-node privacy communication is the first switch device of communication path, the obtaining a key for decryption according to the node identities in the identity quadruple includes: determine whether the node stores a key taking the node identity of the communication source node in the identity quadruple as index; and the obtaining a key for encryption according to the node identities in the identity quadruple includes: sequentially determine, in the sequence of the communication destination node and the last switch device or the sequence of the last switch device and the communication destination node, whether the node stores a key taking one of the node identities of the above nodes in the identity quadruple as index.

Understandably, the inter-node privacy communication method provided by embodiments of the present disclosure may be applied to the network node. The network node refers to a network communication entity connected to the communication network. Specifically, the network node may be a switch device, such as a switch, a router, etc., and may further be a user end (UE), such as a cell phone, a tablet computer, a laptop personal computer, a desktop personal computer, and any user equipment which may interact with other nodes by means of any form of wired connection.

In order to make the technical solution of the present disclosure clearer and easier to understand, an inter-node privacy communication method provided by an embodiment of the present disclosure will be introduced below in combination with the drawings.

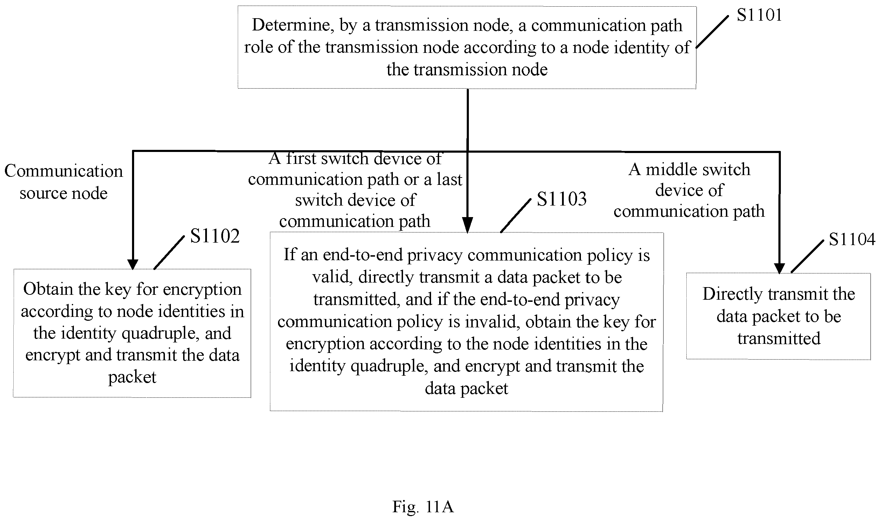

First, a transmission processing process will be introduced from the perspective of a transmission node. Communication path roles of inter-node privacy communication include a communication source node of communication path, a first switch device of communication path, a middle switch device of communication path, a last switch device of communication path, and a communication destination node. Any network node in a network establishes a key with an opposite-end network node and takes a node identity of the opposite-end network node as index to store the key. With reference to a flow chart of an inter-node privacy communication method shown in Fig. 11A, the method includes S1101 to S1104.

51101, Determine, by the transmission node, a communication path role of the transmission node according to a node identity of the transmission node. If the communication path role of the transmission node is a communication source node, S1102 is executed; if the communication path role of the transmission node is a first switch device of communication path or a last switch device of communication path, S1103 is executed; and if the communication path role of the transmission node is a middle switch device of communication path, S1104 is executed.

The communication path role of the transmission node refers to a role undertaken by the transmission node in current inter-node privacy communication. The communication path role specifically may include the communication source node, the first switch device of communication path, the middle switch device of communication path, the last switch device of communication path, and the communication destination node. The communication path role is determined according to the node identity of the transmission node. In a specific implementation, the transmission node may obtain the node identity of the transmission node, compares the node identity of the transmission node with an identity quadruple carried in a data packet to be transmitted, and determines the transmission node as a certain communication path role if the node identity of the transmission node matches a node identity of the certain communication path role in the identity quadruple. In practical application, the communication source node may firstly query whether the identity quadruple is stored locally, if so, the identity quadruple is added to a data packet, such that each network node in the communication path determines the communication path role on the basis of the identity quadruple carried in the data packet, otherwise, the communication source node initiates a TLP switching path searching request to obtain the identity quadruple.

For the transmission node, the communication path role of the transmission node may not be the communication destination node, and therefore, the node identity of the transmission node may be only compared with node identities of the communication source node, the first switch device and the last switch device in the identity quadruple when being compared with the identity quadruple, so as to determine the communication path role of the transmission node.

Specifically, the transmission node may determine the communication path role of the transmission node in the current inter-node privacy communication by the following S11011 to S11013.

S11011, Determining, by the transmission node, whether the node identity of the communication source node in the identity quadruple in the current inter-node privacy communication is equal to the node identity of the transmission node to obtain a first determination result, and determining that the communication path role of the transmission node in the current inter-node privacy communication is the communication source node in a case that the first determination result is yes.

511012, Determining whether the node identity of the first switch device in the identity quadruple in the current inter-node privacy communication is equal to the node identity of the transmission node to obtain a second determination result in a case that the first determination result is no, and determining that the communication path role of the transmission node in the current inter-node privacy communication is the first switch device of communication path in a case that the second determination result is yes.

S11013, determining whether the node identity of the last switch device in the identity quadruple in the current inter-node privacy communication is equal to the node identity of the transmission node to obtain a third determination result in a case that the second determination result is no, and determining that the communication path role of the transmission node in the current inter-node privacy communication is the last switch device of communication path in a case that the third determination result is yes; and determining that the communication path role of the transmission node in the current inter-node privacy communication is the middle switch device of communication path in a case that the third determination result is no.

It should be noted that for S11012 and S11013, the transmission node may firstly determine whether the node identity of the last switch device in the identity quadruple in the current inter-node privacy communication is equal to the node identity of the transmission node to obtain a fourth determination result in a case that the first determination result is no, and it is determined that the communication path role of the transmission node in the current inter-node privacy communication is the last switch device of communication path in a case that the fourth determination result is yes; in a case that the fourth determination result is no, the transmission node further determines whether the node identity of the first switch device in the identity quadruple in the current inter-node privacy communication is equal to the node identity of the transmission node to obtain a fifth determination result, and it is determined that the communication path role of the transmission node in the current inter-node privacy communication is the first switch device of communication path in a case that the fifth determination result is yes; and in a case that the fifth determination result is no, it is determined that the communication path role of the transmission node in the current inter-node privacy communication is the middle switch device of communication path.

That is, when determining the communication path role of the transmission node, the transmission node preferentially determines whether the communication path role of the transmission node is the communication source node, and then determines whether the communication path role of the transmission node is the first switch device of communication path or the last switch device of communication path. In other words, the transmission node may be compared with the ID of the transmission node, i.e., a local ID, in the sequence of ID_{Source}->ID_{SW-last}->ID_{SW-first} or ID_{Source}->ID_{SW-first}->ID_{SW-last}, so as to determine the communication path role of the transmission node in the current inter-node privacy communication. It should be noted that if the communication path role is determined, the step of comparing the node identity of the transmission node with subsequent node identities may not be executed any more. For example, the transmission node has determined that the communication path role is the communication source node, such that the step of comparing the local ID with ID_{SW-first} or ID_{SW-last} may not be executed.

Correspondingly, after determining the communication path role of the transmission node, the transmission node may perform a transmission processing operation corresponding to the communication path role on the basis of the communication path role of the transmission node in a current inter-node privacy communication path. Specifically, when the communication path role of the node is the communication source node, S1102 is executed; when the communication path role of the node is the first switch device of communication path or the last switch device of communication path, S1103 is executed; and when the communication path role of the node is the middle switch device of communication path, S1104 is executed.

S1102, Obtain, by the transmission node, the key for encryption according to node identities in the identity quadruple, and encrypt and transmit, by the transmission node, the data packet.

In a case that the communication path role of the transmission node in the current inter-node privacy communication is the communication source node, the transmission node sequentially determines, in the sequence of the communication destination node, the last switch device and the first switch device or the sequence of the communication destination node, the first switch device and the last switch device in the identity quadruple, whether the transmission node stores a key taking one of the node identities of the above nodes in the identity quadruple as index. That is, for the communication source node, the transmission node obtain the key for encryption by performing key query sequentially in the sequence of ID_{Destination}->ID_{SW-last}->ID_{SW-first} or the sequence of ID_{Destination}->ID_{SW-first}->ID_{SW-last}. It should be noted that key query only needs to obtain the key according to the sequence of key query, and once the key is obtained, the step of querying keys taking the subsequent node identities as indexes may not be executed any more. For example, if the transmission node has obtained the key taking the node identity ID_{Destination} as index, the step of querying keys taking the node identities ID_{SW-first} and ID_{SW-last} as indexes may not be executed any more.

If the transmission node stores the key taking the node identity of the node in the identity quadruple as index, the key is utilized to encrypt a data packet to be transmitted, and then the encrypted data packet is transmitted. If the transmission node does not store the key taking the node identity of the node in the identity quadruple as the index, the data packet is discarded.

S1103, if an end-to-end privacy communication policy is valid, directly transmit, by the transmission node, the data packet to be transmitted, and if the end-to-end privacy communication policy is invalid, obtain, by the transmission node, the key for encryption according to the node identities in the identity quadruple, and encrypt and transmit, by the transmission node, the data packet.

The end-to-end privacy communication policy refers to a policy for privacy communication by utilizing a key between a source end and a destination end, where the source end is the communication source node, and the destination end is the communication destination node. In the data packet, for example, a packet header of the data packet may carry an identity of a privacy communication policy, and the identity of the privacy communication policy may indicate whether the end-to-end privacy communication policy is enabled. In one example, if the identity of the privacy communication policy is valued as 1, it is indicated that the end-to-end privacy communication policy is valid and enabled, and if the identity of the privacy communication policy is not valued as 1, it is indicated that the end-to-end privacy communication policy is invalid and is not enabled.

When the communication source node and the communication destination node are both stations and the end-to-end privacy communication policy is valid, the first switch device of communication path and the last switch device of communication path may directly transmit the data packet to be transmitted without other processing.

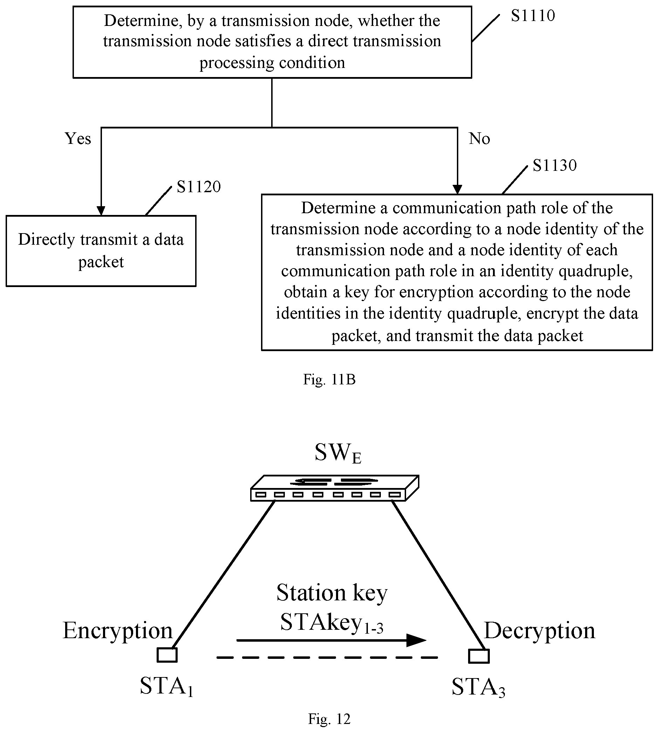

Specifically, with reference to Fig. 12, when the communication source node is a station STA₁ and the communication destination node is another station STA₃ directly connected under the same switch device SW_{E}, i.e., communication Type 6 in 8 communication types defined in the TLP, and if the transmission node is the switch device SW_{E} directly connected to the communication source node and the communication destination node, and the end-to-end privacy communication policy corresponding to the data packet to be transmitted is valid, the switch device SW_{E} may directly transmit the data packet to be transmitted to the communication destination node directly connected to the switch device. Thus, the communication destination node may use the key (which may generally be referred to as an station key) STAkey₁₋₃ established with the communication source node to decrypt the data packet, thereby achieving privacy communication between the communication source node STA₁ and the communication destination node STA₃.

If the end-to-end privacy communication policy is invalid, the transmission node obtains the key for encryption according to the node identities in the identity quadruple, and encrypts and transmits the data packet. A specific implementation for obtaining the key is as follows: sequentially determining, in the sequence of the communication destination node and the last switch device or the sequence of the last switch device and the communication destination node in the identity quadruple, whether the transmission node stores a key taking one of the node identities of the above nodes in the identity quadruple as index in a case that the communication path role of the transmission node in the current inter-node privacy communication is the first switch device of communication path; and determining whether the transmission node stores a key taking the node identity of the communication destination node in the identity quadruple as index in a case that the communication path role of the transmission node in the current inter-node privacy communication is the last switch device of communication path.

That is, for the first switch device of communication path, the transmission node performs key query sequentially in the sequence of ID_{Destination}->ID_{SW-last} or ID_{SW-last}->ID_{Destination}, and for the last switch device of communication path, the transmission node queries a key according to ID_{Destination}. If the key is found, the key taking the node identity of the node in the identity quadruple as index is utilized to encrypt the data packet, and the encrypted data packet is transmitted. If the key is not found, the data packet is discarded.

S1104, Directly transmit, by the transmission node, the data packet to be transmitted.

When the communication path role of the transmission node in the current inter-node privacy communication is the middle switch device of communication path, since the data packet has been encrypted via a key between the communication source node and the last switch device of communication path, a key between the communication source node and the communication destination node, a key between the first switch device of communication path and the last switch device of communication path or a key between the first switch device of communication path and the communication destination node for privacy processing, therefore the transmission node does not need to encrypt the data packet any more and may directly transmit the data packet.

In practical application, there may further exist the following case: the end-to-end privacy communication policy is valid, but the data packet only contains the node identities of the communication source node and the communication destination node, such that when the data packet passes through the first switch device of communication path or the last switch device of communication path, the data packet does not contain the node identities of the first switch device of communication path and the last switch device of communication path, and therefore, when the communication path role is determined, the first switch device of communication path or the last switch device of communication path is determined as the middle switch device of communication path, and the data packet is directly forwarded.

In the embodiments, the sequence of S1102 to S1104 does not exist, and for each node in the communication path, corresponding operation is executed on the basis of the communication path role of each node, thereby achieving a transmission process of inter-node privacy communication.

On the basis of the above embodiments, a transmission node processing process may be divided into two types, one type is direct transmission processing, that is, the transmission node directly transmits the data packet, and the other type is encrypted transmission processing, that is, the data packet needs to be encrypted and transmitted. Thus, in some implementations, the transmission node may preferentially determine whether the transmission node satisfies a direct transmission processing condition, and if so, the data packet is directly transmitted; otherwise, a corresponding processing process is executed on the basis of the communication path role of the transmission node.

For the transmission node, a direct transmission processing determination condition of the transmission node may include the following cases: one case is that the end-to-end privacy communication policy is valid and the communication path role of the transmission node is not the communication source node; and the other case is that the end-to-end privacy communication policy is invalid and the communication path role of the transmission node is neither the communication source node nor the first switch device of communication path and the last switch device of communication path, that is, the transmission node is the middle switch device of communication path. If the transmission node determines that the transmission node satisfies any one of the direct transmission processing condition, the data packet may be directly transmitted.

It should be noted that the inter-node privacy communication method provided by the embodiment of the present disclosure is suggested to be implemented in the form of an application or software, and the application or software may utilize a machine-oriented programming language such as an assembly language or an advanced programming language such as a C language to implement the method.

If the machine-oriented programming language such as the assembly language is used, a comparison result of the node identity of the transmission node and the node identities of the communication source node and the first switch device of communication path and the last switch device of communication path may be directly presented in a compiling result, and therefore, the communication path role of the transmission node may be directly presented, when the transmission node does not satisfy the direct transmission processing condition, a corresponding processing process may be executed directly on the basis of the communication path role, the specific implementation of the processing process may be described with reference to the relevant content of an embodiment shown in Fig. 11A, and in this case, a corresponding encryption transmission processing process is executed only according to the communication path role of the transmission node.

If the advanced programming language such as the C language is used to implement the method, only whether the transmission node satisfies the direct transmission processing condition may be presented and the communication path role of the transmission node may not be presented in a compiling result, and therefore, when determining that the transmission node does not satisfy the direct transmission processing condition, the transmission node needs to determine the communication path role of the transmission node, and then executes a corresponding processing process on the basis of the communication path role. A specific implementation of the method may refer to Fig. 11B. Fig. 11B shows a flow chart corresponding to an implementation of an inter-node privacy communication method. The method specifically includes S1110 to S1130.

51110, Determine, by a transmission node, whether the transmission node satisfies a direct transmission processing condition, and if so, execute S1120; otherwise, execute S1130.

In a specific implementation, the transmission node determines whether the transmission node satisfies the direct transmission processing condition by comparing a node identity of the transmission node with node identities of a communication source node and a first switch device and a last switch device of communication path in an identity quadruple, and determining whether an end-to-end privacy communication policy is valid.

Specifically, when the end-to-end privacy communication policy is valid and the node identity of the transmission node is not equal to the node identity of the communication source node, it may be determined that the transmission node satisfies the direct transmission processing condition. Alternatively, when the end-to-end privacy communication policy is invalid, and the node identity of the transmission node is not equal to the node identity of the communication source node, and is not equal to the node identities of the first switch device of communication path and the last switch device of communication path, it may further be determined that the transmission node satisfies the direct transmission processing condition.

When the transmission node determines that the transmission node satisfies the direct transmission processing condition, S1120 may be directly executed, that is, the data packet is directly transmitted; and when the transmission node determines that the transmission node does not satisfy the direct transmission processing condition, S1130 is executed, that is, the communication path role of the transmission node is determined anew, and the data packet is additionally encrypted on the basis of the communication path role.

It should be noted that when the transmission node determines that the transmission node does not satisfy the direct transmission processing condition, that is, the communication path role of the transmission node is a middle switch device of communication path, it is determined that the end-to-end privacy communication policy is actually redundant, because the middle switch device does not care about the end-to-end privacy communication policy, and such processing in the embodiment is to facilitate use of the advanced programming language such as the C language for engineering implementation.

S1120, Directly transmit a data packet.

S1130, Determine, by the transmission node, a communication path role of the transmission node according to the node identity of the transmission node and the node identity of each communication path role in an identity quadruple, obtain, by the transmission node, a key for encryption according to the node identities in the identity quadruple, and encrypt and transmit, by the transmission node, a data packet.

The process that the key for encryption is obtained according to the node identities in the identity quadruple and the obtained key for encryption is utilized for encryption may be described with reference to the relevant content above, which is not described herein.

It may be seen from the above that the embodiments of the present disclosure provide an inter-node privacy communication method. The inter-node privacy communication method mainly aims at a transmission processing process of inter-node privacy communication, and in the method, the transmission node executes corresponding operation on the basis of the communication path role of the transmission node. Specifically, if the communication path role is the communication source node, the key for encryption is obtained according to the node identities in the identity quadruple, and the data packet is encrypted and transmitted; if the communication path role is the first switch device of communication path or the last switch device of communication path and the end-to-end privacy communication policy is valid, the data packet is directly transmitted; when the communication path role is the first switch device of communication path or the last switch device of communication path and the end-to-end privacy communication policy is invalid, the key for encryption is obtained according to the node identities in the identity quadruple, and the data packet is encrypted and transmitted; and when the communication path role of the node is the middle switch device of communication path, the data packet to be transmitted is directly transmitted. Thus, each node uses a unified flow to complete an entire process of privacy communication, and it is unnecessary to determine communication types, thereby reducing complexity of the flow, and improving inter-node privacy communication efficiency.

Moreover, the method takes the node identity as the index to store the key, and a corresponding key searching method is configured according to the communication path role of the node. Thus, the key may be queried only according to the node identity when the key is to be queried, and it is unnecessary to determine the inter-node key types, thereby improving key searching efficiency, and further improving inter-node privacy communication efficiency.

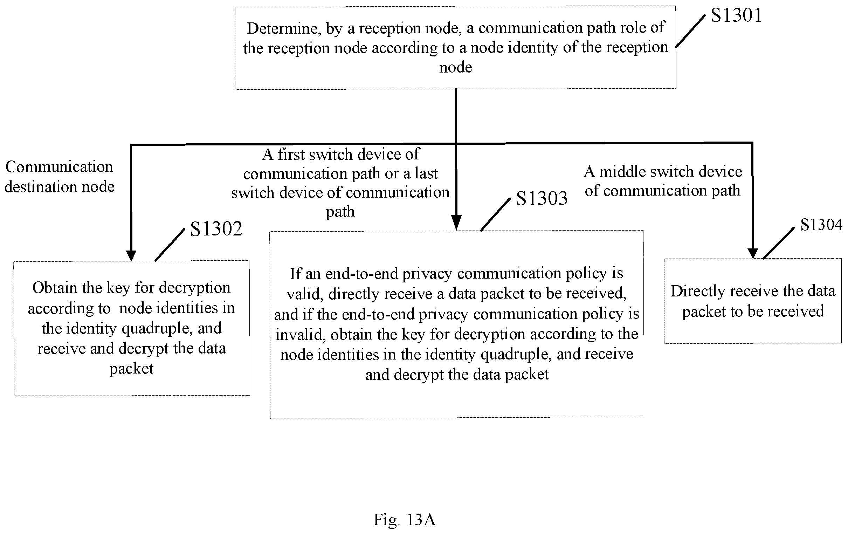

Further, a reception processing process will be introduced from the perspective of a reception node. Communication path roles of inter-node privacy communication include a communication source node, a first switch device of communication path, a middle switch device of communication path, a last switch device of communication path, and a communication destination node. Any network node in a network establishes a key with an opposite-end network node and takes a node identity of the opposite-end network node as index to store the key. With reference to a flow chart of an inter-node privacy communication method shown in Fig. 13A, the method includes S1301 to S1304.

S1301, Determine, by a reception node, a communication path role of the reception node according to a node identity of the reception node. If the communication path role of the reception node is a communication destination node, S1302 is executed; if the communication path role of the reception node is a first switch device of communication path or a last switch device of communication path, S1303 is executed; and if the communication path role of the reception node is a middle switch device of communication path, S1304 is executed.

The communication path role of the reception node refers to a role undertaken by the reception node in current inter-node privacy communication. The communication path role of the reception node is determined according to the node identity of the reception node. In a specific implementation, the reception node may obtain the node identity of the reception node, compares the node identity of the reception node with an identity quadruple carried in a data packet to be received, and determines the reception node as a certain communication path role if the node identity of the reception node matches a node identity of the certain communication path role in the identity quadruple.

For the reception node, the communication path role of the reception node may not be the communication source node, and therefore, the node identity of the reception node may be only compared with node identities of the first switch device of communication path, the last switch device of communication path, and the communication destination node in the identity quadruple when being compared with the identity quadruple, so as to determine the communication path role of the reception node.

Specifically, the reception node may determine the communication path role of the reception node in the current inter-node privacy communication by S13011 to S13013.

S13011, Determining, by the reception node, whether a node identity of the communication destination node in the identity quadruple in the current inter-node privacy communication is equal to the node identity of the reception node to obtain a first determination result, and determining that the communication path role of the reception node in the current inter-node privacy communication is the communication destination node in a case that the first determination result is yes.

S13012, Determining whether a node identity of the last switch device in the identity quadruple in the current inter-node privacy communication is equal to the node identity of the reception node to obtain a second determination result in a case that the first determination result is no, and determining that the communication path role of the reception node in the current inter-node privacy communication is the last switch device of communication path in a case that the second determination result is yes.

S13013, Determining whether a node identity of the first switch device in the identity quadruple in the current inter-node privacy communication is equal to the node identity of the reception node to obtain a third determination result in a case that the second determination result is no, and determining that the communication path role of the reception node in the current inter-node privacy communication is the first switch device of communication path in a case that the third determination result is yes; and determining that the communication path role of the reception node in the current inter-node privacy communication is the middle switch device of communication path in a case that the third determination result is no.

It should be noted that for S13012 and S13013, the reception node may firstly determine whether the node identity of the first switch device in the identity quadruple in the current inter-node privacy communication is equal to the node identity of the reception node to obtain a fourth determination result in a case that the first determination result is no, and it is determined that the communication path role of the reception node in the current inter-node privacy communication is the first switch device of communication path in a case that the fourth determination result is yes; in a case that the fourth determination result is no, the reception node determines whether the node identity of the last switch device in the identity quadruple in the current inter-node privacy communication is equal to the node identity of the reception node to obtain a fifth determination result, and it is determined that the communication path role of the reception node in the current inter-node privacy communication is the last switch device of communication path in a case that the fifth determination result is yes, and it is determined that the communication path role of the reception node in the current inter-node privacy communication is the middle switch device of communication path in a case that the fifth determination result is no.

That is, when determining the communication path role of the reception node, the reception node preferentially determines whether the communication path role of the reception node is the communication destination node, and then determines whether the communication path role of the reception node is the first switch device of communication path or the last switch device of communication path. In other words, the reception node may be compared with the ID of the reception node, i.e., a local ID, in the sequence of ID_{Destination}->ID_{SW-last}->ID_{SW-first} or ID_{Destination}->ID_{SW-first}->ID_{SW-last}, so as to determine the communication path role of the reception node in the current inter-node privacy communication. It should be noted that if the communication path role is determined, the step of comparing the node identity of the reception node with subsequent node identities may not be executed any more. For example, the reception node has determined that the communication path role is the communication destination node, such that the step of comparing the local ID with ID_{SW-first} or ID_{SW-last} may not be executed.

It should also be noted that when the first determination result is no, that is, when the local ID of the reception node is not equal to ID_{Destination}, if the reception node is a station and the station may not forward data as a middle device, it is unnecessary to execute subsequent determination steps, and the reception node discards the data packet.

In practical application, each node compares the node identity of the each node with the node identities in the identity quadruple to determine the communication path role of each node. For any node, if the communication path role has been determined during transmission processing, it is unnecessary to determine the communication path role of the node anew during receiving processing. Correspondingly, if the communication path role of the node has been determined during receiving processing, it is unnecessary to determine the communication path role of the node anew during transmission processing.

Correspondingly, after determining the communication path role of the reception node, the reception node may perform a receiving processing operation corresponding to the communication path role on the basis of the communication path role of the reception node in a current inter-node privacy communication path. Specifically, when the communication path role of the node is the communication destination node, S1302 is executed; when the communication path role of the node is the first switch device of communication path or the last switch device of communication path, S1303 is executed; and when the communication path role of the node is the middle switch device of communication path, S1304 is executed.

S1302, Obtain, by the reception node, a key for decryption according to a node identities in an identity quadruple, and receive and decrypt, by the reception node, a data packet.

In a case that the communication path role of the reception node in the current inter-node privacy communication is the communication destination node, the reception node sequentially determines, in the sequence of the communication source node, the first switch device of communication path and the last switch device of communication path or the sequence of the communication source node, the last switch device of communication path and the first switch device of communication path, whether the reception node stores a key taking one of the node identities of the above nodes in the identity quadruple as index. That is, for the communication destination node, key query is performed sequentially in the sequence of ID_{Source}->ID_{SW-last}->ID_{SW-first} or the sequence of ID_{Source}->ID_{SW-first}->ID_{SW-last}, so as to obtain the key for decryption.

If the reception node stores the key taking the node identity of the node in the identity quadruple as index, the key is utilized to decrypt the data packet after the data packet is received. If the reception node does not store the key taking the node identity of the node in the identity quadruple as the index, the data packet is discarded.

S1303, If an end-to-end privacy communication policy is valid, directly receive, by the reception node, a data packet to be received, and if the end-to-end privacy communication policy is invalid, obtain, by the reception node, the key for decryption according to the node identities in the identity quadruple, and receive and decrypt, by the reception node, the data packet.

The description of the relevant content of the end-to-end privacy communication policy may refer to the transmission processing side. When the reception node is the first switch device of communication path or the last switch device of communication path, and the end-to-end privacy communication policy corresponding to the data packet to be received is valid, the reception node directly receives the data packet to be received.

Fig. 12 is still taken as an example for illustration. The reception node SW_{E} is the first switch device of communication path and the last switch device of communication path, when an identity of the end-to-end privacy communication policy corresponding to the data packet to be received is valid, the SW_{E} directly receives the data packet to be received, that is, it is unnecessary to additionally decrypt the data packet transmitted by a communication source node STA₁. Thus, when executing subsequent transmission processing, the SW_{E} directly transmits the data packet without additional encryption operation.

When the end-to-end privacy communication policy corresponding to the data packet to be received is invalid, the reception node needs to receive the data packet, and decrypts the data packet. In a specific implementation, the reception node obtains the corresponding key according to the node identities in the identity quadruple, and utilizes the key to decrypt the data packet. A specific implementation for obtaining the key is as follows: sequentially determining, in the sequence of the communication source node and the first switch device or the sequence of the first switch device and the communication source node, whether the reception node stores a key taking one of the node identities of the above nodes in the identity quadruple as index in a case that the communication path role of the reception node in the current inter-node privacy communication is the last switch device of communication path; and determining whether the reception node stores a key taking the node identity of the communication source node in the identity quadruple as index in a case that the communication path role of the reception node in the current inter-node privacy communication is the first switch device of communication path.

That is, for the last switch device of communication path, the reception node sequentially performs key query in the sequence of ID_{Source}->ID_{SW-first} or ID_{SW-first}->ID_{Source}, and for the first switch device of communication path, the reception node queries a key according to ID_{Source}. If the key is found, the key taking the node identity of the node in the identity quadruple as index is utilized to decrypt the data packet after the data packet is received. If the key is not found, the data packet is discarded.

S1304, Directly receive, by the reception node, the data packet to be received.

When the communication path role of the reception node in the current inter-node privacy communication is the middle switch device of communication path, since the data packet has been encrypted via a key between the communication source node and the last switch device of communication path, a key between the communication source node and the communication destination node, a key between the first switch device of communication path and the last switch device of communication path or a key between the first switch device of communication path and the communication destination node for privacy processing, therefore the reception node does not need to decrypt the data packet any more and may directly receive the data packet.

In the embodiments, the sequence of S1302 to S1304 does not exist, and for each node in the communication path, corresponding operation is executed on the basis of the communication path role of each node, thereby achieving a receiving process of inter-node privacy communication.

Similar to the transmission node, a reception node processing process may be divided into two types, one type is direct receiving processing, that is, the reception node only receives the data packet, and the other type is that decryption operation further needs to be executed after receiving operation is executed. Thus, in some implementations, the reception node may preferentially determine whether the reception node satisfies a direct reception processing condition, and if so, the data packet is directly received; otherwise, a corresponding processing process is executed on the basis of the communication path role of the reception node.

For the reception node, a direct receiving processing determination condition of the reception node may include the following cases: one case is that the end-to-end privacy communication policy is valid and the communication path role of the reception node is not the communication destination node; and the other case is that the end-to-end privacy communication policy is invalid and the communication path role of the reception node is neither the communication destination node nor the first switch device of communication path and the last switch device of communication path, that is, the reception node is the middle switch device of communication path. If the reception node determines that the reception node satisfies any one of the direct reception processing condition, the data packet may be directly received without executing additional decryption operation.

It should be noted that the inter-node privacy communication method provided by the embodiment of the present disclosure is suggested to be implemented in the form of an application or software, and the application or software may utilize a machine-oriented programming language such as an assembly language or an advanced programming language such as a C language to implement the method.

If the machine-oriented programming language such as the assembly language is used, a comparison result of the node identity of the reception node and the node identities of the communication destination node and the first switch device of communication path and the last switch device of communication path may be directly presented in a compiling result, and therefore, the communication path role of the reception node may be directly presented, when the reception node does not satisfy the direct reception processing condition, a corresponding processing process may be executed directly on the basis of the communication path role, the specific implementation of the processing process may refer to the description of the relevant content shown in Fig. 13A, and in this case, a corresponding receiving and decryption processing process is executed only according to the communication path role of the reception node.

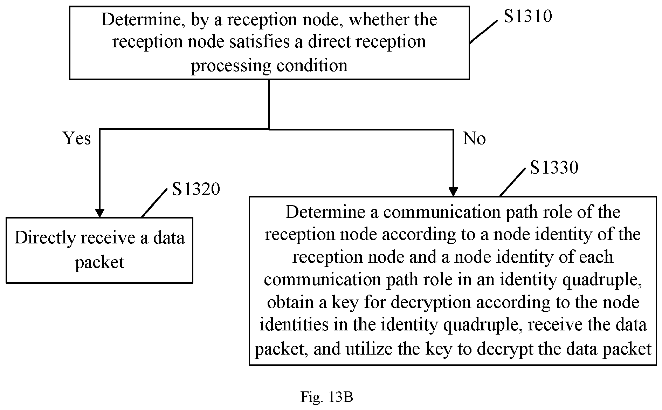

If the advanced programming language such as the C language is used to implement the method, only whether the reception node satisfies the direct reception processing condition may be presented and the communication path role of the reception node may not be presented in a compiling result, and therefore, when determining that the reception node does not satisfy the direct reception processing condition, the reception node needs to determine the communication path role of the reception node, and then executes a corresponding processing process on the basis of the communication path role. A specific implementation of the method may refer to Fig. 13B. Fig. 13B shows a flow chart corresponding to an implementation of an inter-node privacy communication method. The method specifically includes S1310 to S1330.

S1310, Determine, by a reception node, whether the reception node satisfies a direct reception processing condition, and if so, execute S1320; otherwise, execute S1330.

In a specific implementation, the reception node compares a node identity of the reception node with node identities of a communication destination node and a first switch device of communication path and a last switch device of communication path in an identity quadruple, and determines whether an end-to-end privacy communication policy is valid, so as to determine whether the reception node satisfies the direct reception processing condition.

Specifically, when the end-to-end privacy communication policy is valid and the node identity of the reception node is not equal to the node identity of the communication destination node, it may be determined that the reception node satisfies the direct reception processing condition. When the end-to-end privacy communication policy is invalid, and the node identity of the reception node is not equal to the node identity of the communication destination node, and is not equal to the node identities of the first switch device of communication path and the last switch device of communication path, it may further be determined that the reception node satisfies the direct reception processing condition.

When the reception node determines that the reception node satisfies the direct reception processing condition, S1320 may be directly executed, that is, the data packet is directly received; and when the reception node determines that the reception node does not satisfy the direct reception processing condition, S1330 may be executed, that is, the communication path role of the reception node is determined anew, and the data packet is additionally decrypted on the basis of the communication path role.

It should be noted that when the reception node determines that the reception node does not satisfy the above direct reception processing condition, that is, the communication path role of the reception node is a middle switch device of communication path, it is determined that the end-to-end privacy communication policy is actually redundant, because the middle switch device does not care about the end-to-end privacy communication policy, and such processing in the embodiment is to facilitate use of the advanced programming language such as the C language for engineering implementation.

S1320, Directly receive a data packet.

S1330, Determine, by the reception node, a communication path role of the reception node according to the node identity of the reception node and the node identity of each communication path role in an identity quadruple, obtain, by the reception node, a key for decryption according to the node identities in the identity quadruple, receive, by the reception node, the data packet, and utilize, by the reception node, the key to decrypt the data packet.

The process in which the key for decryption is obtained according to the node identities in the identity quadruple and the obtained key is utilized for decryption may be described with reference to the relevant content above, which is not described herein.

It may be seen from the above that the embodiment of the present disclosure provides an inter-node privacy communication method. The inter-node privacy communication method mainly aims at a receiving processing process of inter-node privacy communication, and in the method, the reception node executes corresponding operation on the basis of the communication path role of the reception node. Specifically, when the communication path role is the communication destination node, the key for decryption is obtained according to the node identities in the identity quadruple, and the data packet is received and decrypted; the data packet is directly received when the communication path role is the last switch device of communication path or the first switch device of communication path and the end-to-end privacy communication policy is valid; when the communication path role is the last switch device of communication path or the first switch device of communication path and the end-to-end privacy communication policy is invalid, the key for decryption is obtained according to the node identities in the identity quadruple, and the data packet is received and decrypted; and when the communication path role of the node is the middle switch device of communication path, the data packet to be received is directly received.

Thus, each node uses a unified flow to complete an entire process of privacy communication, and it is unnecessary to determine communication types, thereby reducing complexity of the flow, and improving inter-node privacy communication efficiency. Moreover, the key may be queried only according to the node identity when the key is to be queried, and it is unnecessary to determine inter-node key types, thereby improving key searching efficiency, and further improving inter-node privacy communication efficiency.

Further, an inter-node privacy communication method provided by an embodiment of the present disclosure will be introduced from the perspective that a node may have a transmission function and a receiving function at the same time in a privacy communication process.

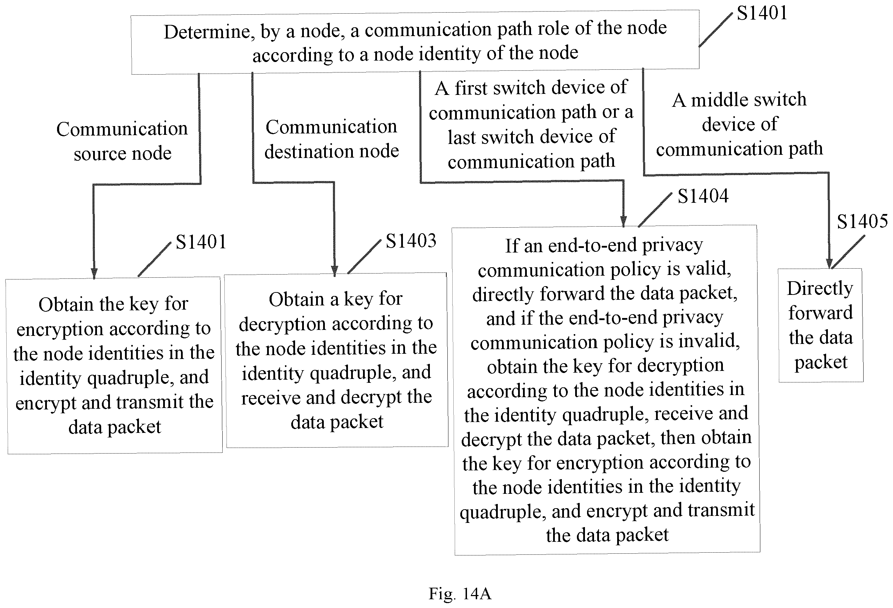

In the method, Communication path roles of inter-node privacy communication include a communication source node of communication path, and a first switch device of communication path, a middle switch device of communication path, a last switch device of communication path, and a communication destination node, and any node in a network establishes a key with an opposite-end network node and takes a node identity of the opposite-end network node as index to store the key. With reference to a flow chart of an inter-node privacy communication method shown in Fig. 14A, the method includes S1401 to S1405.

S1401, Determine, by a node, a communication path role of the node according to a node identity of the node. If the communication path role of the current node is a communication source node, S1402 is executed; if the communication path role of the current node is a communication destination node, S1403 is executed; if the communication path role of the current node is a first switch device of communication path or a last switch device of communication path, S1404 is executed; and if the communication path role of the current node is a middle switch device of communication path, S1405 is executed.

The communication path roles of the node may include the communication source node, and the first switch device of communication path, the middle switch device of communication path, the last switch device of communication path, and the communication destination node.

In a specific implementation, the node may compare the node identity of the node with node identities of the communication source node, the communication destination node, the first switch device and the last switch device in an identity quadruple, if the node identity in the identity quadruple is equal to a node identity of a local node, the communication path role corresponding to the node identity in the identity quadruple is the communication path role of the local node, and if the node identity is not equal to the node identity of the local node, the communication path role of the local node is the middle switch device of communication path.

Specifically, the node may determine the communication path role of the node in current inter-node privacy communication by S14011 to S14014.

S14011, Determining, by the node, whether a node identity of the communication source node in the identity quadruple in the current inter-node privacy communication is equal to the node identity of the node to obtain a first determination result, and determining that the communication path role of the node in the current inter-node privacy communication is the communication source node in a case that the first determination result is yes.

S14012, Determining whether a node identity of the communication destination node in the identity quadruple in the current inter-node privacy communication is equal to the node identity of the node to obtain a second determination result in a case that the first determination result is no, and determining that the communication path role of the node in the current inter-node privacy communication is the communication destination node in a case that the second determination result is yes.

It should be noted that for S14011 and S14012, the node can determine firstly whether the node identity of the communication destination node in the identity quadruple in the current inter-node privacy communication is equal to the node identity of the node to obtain a third determination result, and determines that the communication path role of the node in the current inter-node privacy communication is the communication destination node in a case that the third determination result is yes; and in a case that the third determination result is no, the node determines that whether the node identity of the communication source node in the identity quadruple in the current inter-node privacy communication is equal to the node identity of the node to obtain a fourth determination result; in a case that the fourth determination result is yes, the node determines that the communication path role of the node in the current inter-node privacy communication is the communication source node.

S14013, Determining whether a node identity of the first switch device in the identity quadruple in the current inter-node privacy communication is equal to the node identity of the node to obtain a fifth determination result in a case that the second determination result or the fourth determination result is no, and determining that the communication path role of the node in the current inter-node privacy communication is the first switch device of communication path in a case that the fifth determination result is yes.

S14014, Determining whether a node identity of the last switch device in the identity quadruple in the current inter-node privacy communication is equal to the node identity of the node to obtain a sixth determination result in a case that the fifth determination result is no, and determining that the communication path role of the node in the current inter-node privacy communication is the last switch device of communication path in a case that the sixth determination result is yes; and determining that the communication path role of the node in the current inter-node privacy communication is the middle switch device of communication path in a case that the sixth determination result is no.

It should be noted that for S14013 and S14014 mentioned above, the node may firstly determine whether the node identity of the last switch device in the identity quadruple in the current inter-node privacy communication is equal to the node identity of the node to obtain a seventh determination result in a case that the second determination result or the fourth determination result is no, and it is determined that the communication path role of the node in the current inter-node privacy communication is the last switch device of communication path in a case that the seventh determination result is yes; and whether the node identity of the first switch device in the identity quadruple in the current inter-node privacy communication is equal to the node identity of the node is determined to obtain an eighth determination result in a case that the seventh determination result is no, and it is determined that the communication path role of the node in the current inter-node privacy communication is the first switch device of communication path in a case that eighth determination result is yes; and it is determined that the communication path role of the node in the current inter-node privacy communication is the middle switch device of communication path in a case that the eighth determination result is no.

That is, when determining the communication path role of the node, the node preferentially determines whether the communication path role of the node is the communication source node or the communication destination node, and then determines whether the communication path role of the node is the first switch device of communication path or the last switch device of communication path. In other words, the node may be sequentially compared with the ID of the node, i.e., a local ID, in the sequence of ID_{Source}->ID_{Destination}->ID_{SW-last}->ID_{SW-first} or ID_{Source}->ID_{Destination}->ID_{SW-first}->ID_{SW-last}, or ID_{Destination}->ID_{Source}->ID_{SW-last}->ID_{SW-first}, or ID_{Destination}->ID_{Source}->ID_{SW-first}->ID_{SW-last}, so as to determine the communication path role of the node in the current inter-node privacy communication.

Correspondingly, after the communication path role of the node is determined, the node may execute processing operation corresponding to the communication path role on the basis of the communication path role of the node in the current inter-node privacy communication path. Specifically, when the communication path role of the node is the communication source node, S1402 is executed; when the communication path role of the node is the communication destination node, S1403 is executed; when the communication path role of the node is the first switch device of communication path or the last switch device of communication path, S1404 is executed; and when the communication path role of the node is the middle switch device of communication path, S1405 is executed.

S1402, Obtain, by the node, a key for encryption according to node identities in an identity quadruple, and encrypt and transmit, by the node, a data packet.

When the communication path role of the node is the communication source node, the node obtains the key for encryption by: sequentially determining, in the sequence of the communication destination node, the last switch device and the first switch device or the sequence of the communication destination node, the first switch device and the last switch device in the identity quadruple, whether the node stores a key taking one of the node identities of the above nodes in the identity quadruple as index in a case that the communication path role of the node in the current inter-node privacy communication is the communication source node.

If the node finds the key, the key is utilized to encrypt the data packet, and the data packet is transmitted; and if the node does not find the key, the data packet is discarded.

S1403, Obtain, by the node, a key for decryption according to the node identities in the identity quadruple, and receive and decrypt, by the node, a data packet.

When the communication path role of the node is the communication destination node, the node obtains the key for decryption by: sequentially determining, in the sequence of the communication source node, the first switch device and the last switch device or the sequence of the communication source node, the last switch device and the first switch device in the identity quadruple, whether the node stores a key taking one of the node identities of the above nodes in the identity quadruple as index.

If the node finds the key, the key is utilized to decrypt the data packet after the data packet is received; and if the node does not find the key, the data packet is discarded.

S1404, If an end-to-end privacy communication policy is valid, directly forward the data packet, and if the end-to-end privacy communication policy is invalid, obtain a key for decryption according to the node identities in the identity quadruple, receive and decrypt the data packet, then obtain a key for encryption according to the node identities in the identity quadruple, and encrypt and transmit the data packet.

When the end-to-end privacy communication policy is valid, the first switch device of communication path or the last switch device of communication path may directly forward the data packet without encryption or decryption, and achieves primacy communication on the basis of a key between the communication source node and the communication destination node.

When the end-to-end privacy communication policy is invalid, the node obtains the key for decryption according to the node identities in the identity quadruple, receives and decrypts the data packet, then obtains the key for encryption according to the node identities in the identity quadruple, and encrypts and transmits the data packet.

When the communication path role of the node is the last switch device of communication path, the key for decryption is obtained by: sequentially determining, in the sequence of the communication source node and the first switch device or the sequence of the first switch device and the communication source node in the identity quadruple, whether the node stores a key taking one of the node identities of the above nodes in the identity quadruple as index. The key for encryption is obtained by: determining whether the node stores a key taking the node identity of the communication destination node in the identity quadruple as index.

When the communication path role of the node is the first switch device of communication path, the key for decryption is obtained by: determining whether the node stores a key taking the node identity of the communication source node in the identity quadruple as index. The key for encryption is obtained by: sequentially determining, in the sequence of the communication destination node and the last switch device or the sequence of the last switch device and the communication destination node in the identity quadruple, whether the node stores a key taking one of the node identities of the above nodes in the identity quadruple as index.

If the key for decryption is found, the key is utilized to decrypt the data packet, and then the key for encryption is searched; and if the key for encryption is found, the key is utilized to encrypt the data packet, and the data packet is transmitted. If the key for decryption is not found, or the key for encryption is not found, the data packet is discarded.

S1405, Directly forward, by the node, the data packet.

When the communication path role of the node in the current inter-node privacy communication is the middle switch device of communication path, the data packet has used a key between the communication source node and the last switch device of communication path, a key between the communication source node and the communication destination node, a key between the first switch device of communication path and the last switch device of communication path or a key between the first switch device of communication path and the communication destination node for privacy processing, and therefore, in this case, the node does not need to decrypt the data packet and encrypt and forward the data packet any more and may directly forward the data packet.

In the embodiments, the sequence of S1402 to S1405 does not exist, and for each node in the communication path, corresponding operation is executed on the basis of the communication path role of each node, thereby achieving inter-node privacy communication.

On the basis of the above embodiments, a node processing process may be divided into two types, one type is direct forwarding, that is, the node forwards the data packet, and the other type is that the data packet needs to be encrypted and/or decrypted. Thus, in some implementations, the node may preferentially determine whether the node satisfies a direct forwarding condition, and if so, the data packet is directly forwarded; otherwise, a corresponding processing process is executed on the basis of the communication path role of the node.

In the embodiments, the direct forwarding condition includes a first forwarding condition and a second forwarding condition. The first forwarding condition is specifically as follows: the end-to-end privacy communication policy is valid and the communication path role of the node is not the communication source node and the communication destination node; and the second forwarding condition is specifically as follows: the end-to-end privacy communication policy is invalid and the communication path role of the node is neither the communication source node and the communication destination node nor the first switch device of communication path and the last switch device of communication path, that is, the node is the middle switch device of communication path. If the node determines that the node satisfies any one of the above direct forwarding conditions, the node may directly forward the data packet.

It should be noted that the inter-node privacy communication method provided by the present disclosure is suggested to be implemented in the form of an application or software, and the application or software may utilize a machine-oriented programming language such as an assembly language or an advanced programming language such as a C language to implement the method.

If the machine-oriented programming language such as the assembly language is used, comparison results of the node identity of the current node and the node identities of the communication source node, the communication destination node, the first switch deviceof communication path and the last switch device of communication path may be directly presented in a compiling result, and therefore, the communication path role of the node may be directly presented, when the node does not satisfy the direct forwarding condition, a corresponding processing process may be executed directly on the basis of the communication path role, the specific implementation of the processing process may refer to the description of the relevant content shown in Fig. 14A, and in this case, a corresponding encryption and decryption processing process is executed only according to the communication path role of the node.

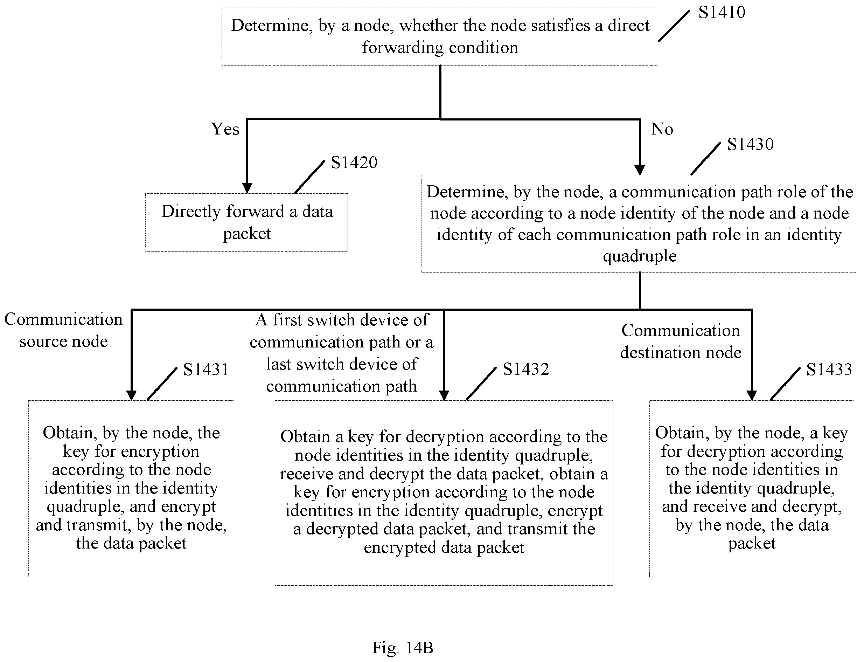

If the advanced programming language such as the C language is used to implement the method, only whether the node satisfies the direct forwarding condition may be presented and the communication path role of the node may not be presented in a compiling result, and therefore, when the node does not satisfy the direct forwarding condition, the node needs to determine the communication path role of the node, and then executes a corresponding processing process on the basis of the communication path role. A specific implementation of the method may refer to Fig. 14B. Fig. 14B shows a flow chart corresponding to an implementation of an inter-node privacy communication method. The method specifically includes S1410 to S1433.

S1410, Determine, by a node, whether the node satisfies a direct forwarding condition, and if so, execute S1420; otherwise, execute S1430.

In a specific implementation, the node compares a node identity of the node with node identities of a communication source node, a communication destination node, and a first switch device of communication path and a last switch device of communication path in an identity quadruple, and determines whether an end-to-end privacy communication policy is valid, so as to determine whether the node satisfies the direct forwarding condition.

Specifically, when the end-to-end privacy communication policy is valid and the node identity of the node is not equal to the node identities of the communication source node and the communication destination node, it may be determined that the node satisfies the direct forwarding condition. When the end-to-end privacy communication policy is invalid, and the node identity of the node is not equal to the node identities of the communication source node and the communication destination node, and is not equal to the node identities of the first switch device of communication path and the last switch device of communication path, it may further be determined that the node satisfies the direct forwarding condition.

When the node determines that the node satisfies the direct forwarding condition, S1420 may be directly executed, and the data packet is directly forwarded; and when the node determines that the node does not satisfy the direct forwarding condition, S1430 is executed, the communication path role of the node is determined anew, and the data packet is additionally encrypted and/or decrypted on the basis of the communication path role.

It should be noted that when the node determines that the node does not satisfy the above direct forwarding condition, that is, when the communication path role of the node is a middle switch device of communication path, it is determined that the end-to-end privacy communication policy is actually redundant, because the middle switch device does not care about the end-to-end privacy communication policy, and such processing in the embodiment is to facilitate use of the advanced programming language such as the C language for engineering implementation.

S1420, Directly forward a data packet.

S1430, Determine, by the node, a communication path role of the node according to the node identity of the node and a node identity of each communication path role in an identity quadruple; and if the communication path role is the communication source node, execute S1431, if the communication path role is the first switch device of communication path or the last switch device of communication path, execute S1432, and if the communication path role is the communication destination node, execute S1433.

In the implementation, S1410 only presents a determination result whether the forwarding condition is satisfied, and does not present a determination result of the communication path role of the node, and therefore, in a case that the direct forwarding condition is not satisfied, the node further needs to compare the node identity of the node with the node identity corresponding to each communication path role in the identity quadruple, so as to determine the communication path role of the node in the privacy communication process. A specific implementation process of the method is described above, which is not described herein.

S1431, Obtain, by the node, a key for encryption according to the node identities in the identity quadruple, and encrypt and transmit, by the node, a data packet.

S1432, Obtain, by the node, a key for decryption according to the node identities in the identity quadruple, receive and decrypt, by the node, a data packet, then obtain, by the node, a key for encryption according to the node identities in the identity quadruple, encrypt, by the node, a decrypted data packet, and transmit, by the node, the encrypted data packet.

S1433, Obtain, by the node, a key for decryption according to the node identities in the identity quadruple, and receive and decrypt, by the node, the data packet.

The process in which the node obtains the key for decryption and the key for encryption according to the node identities in the identity quadruple, and utilizes the obtained key for encryption and decryption may be described with reference to the relevant content above, which is not described herein.

The inter-node privacy communication method provided by the embodiment of the present disclosure is introduced above from the perspective of interaction, and in order to make the technical solution of the present disclosure clearer, the inter-node privacy communication method provided by the embodiment of the present disclosure will be introduced below in combination with a specific application scene.

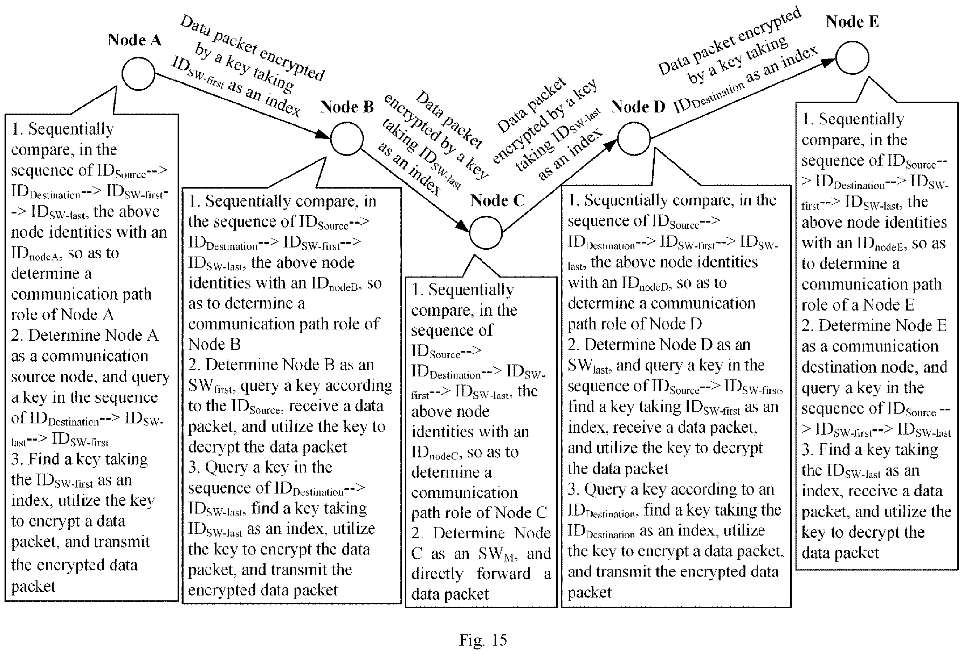

With reference to a schematic diagram of an application scene of an inter-node privacy communication method shown in Fig. 15, the embodiment mainly describes a specific implementation of an application scene of communication type 7 of inter-node privacy communication defined in the TePA-based LAN Security (TLSec) protocol. Communication Type 7 includes all communication path roles in inter-node privacy communication, i.e., a communication source node, a first switch device of communication path, a middle switch device of communication path, a last switch deviceof communication path and a communication destination node. According to definition in the TLSec protocol, in communication type 7, the communication source node and the communication destination node are both stations, an end-to-end privacy communication policy is invalid, a key only exists between the communication source node and the first switch device of communication path, a key only exists between the communication destination node and the last switch device of communication path, a key between the last switch device of communication path and the first switch device of communication path is only used, and keys do not exist between the communication source node and the last switch device of communication path, between the communication source node and the communication destination node, and between the first switch device of communication path and the communication destination node.

In the application scene, a node A transmits a data packet to a node E, that is, the node A is a source node, and the node E is a destination node. The node A firstly queries whether switching path information from the node A to the node E is stored locally, if so, privacy communication is carried out on the basis of the switching path information, otherwise, the node A initiates a switching path searching request, so as to obtain the switching path information from the node A to the node E.

In the application scene, the switching path information of the node A is represented by an identity quadruple, which is specifically represented as [ID_{Source}, ID_{SW-first}, ID_{SW-last}, ID_{Destination}]. ID_{Source} is a node identity of the communication source node, ID_{SW-first} is a node identity of the first switch device of communication path, ID_{SW-last} is a node identity of the last switch device of communication path, and ID_{Destination} is a node identity of the communication destination node.

In this application scene, the node A compares a node identity ID_{nodeA} of the node A with the node identities in the identity quadruple. Specifically, the node identities in the identity quadruple are compared with the local ID in the sequence of ID_{Source}-->ID_{Destination}-->ID_{SW-first}-->ID_{SW-last}, so as to determine a communication path role of the node A. In this example, the node A determines that a communication path role of the node A is the communication source node, queries a key in the sequence of ID_{Destination}-->ID_{SW-last}-->ID_{SW-first}, finally, finds a key taking ID_{SW-first} as index, utilizes the key to encrypt a data packet, and transmit the data packet to a next node, i.e., a node B.

The node B compares a node identity ID_{nodeB} of the node B with the node identities in the identity quadruple. Specifically, the node identities in the identity quadruple are compared with the local ID in the sequence of ID_{Source}-->ID_{Destination}-->ID_{SW-first}-->ID_{SW-last}, so as to determine the communication path role of the node B. In this example, the node B determines that the communication path role of the node B is the first switch device of communication path, queries a key according to ID_{Source} because the end-to-end privacy communication policy is invalid, finally finds a key taking ID_{Source} as index, receives the data packet, utilizes the key to decrypt the data packet, and queries a key in the sequence of ID_{Destination}-->ID_{SW-last}, finally, finds a key taking ID_{SW-last} as index, utilizes the key to encrypt the data packet, and transmits the data packet to a next node, i.e., a node C.

The node C compares a node identity ID_{nodeC} of the node C with the node identities in the identity quadruple. Specifically, the node identities in the identity quadruple are compared with the local ID in the sequence of ID_{Source}-->ID_{Destination}-->ID_{SW-first}-->ID_{SW-last}, so as to determine the communication path role of the node C. In this example, the node C determines that the communication path role of the node C is the middle switch device of communication path, and therefore, directly forwards the data packet to a next node, i.e., a node D, without additional encryption or decryption processing.

The node D compares a node identity ID_{nodeD} of the node D with the node identities in the identity quadruple. Specifically, the node identities in the identity quadruple are compared with the local ID in the sequence of ID_{Source}-->ID_{Destination}-->ID_{SW-first}-->ID_{SW-last}, so as to determine the communication path role of the node D. In this example, the node D determines that the communication path role of the node D is the last switch device of communication path, queries a key in the sequence of ID_{Source}--> ID_{SW-first} because the end-to-end privacy communication policy is invalid, and finally finds the key taking ID_{SW-first} as index, the node D receives the data packet, utilizes the key to decrypt the data packet, and queries a key according to ID_{Destination}, finally, finds a key taking ID_{Destination} as index, utilizes the key to encrypt the data packet, and transmits the data packet to a next node, i.e., a node E.

The node E compares a node identity ID_{nodeE} of the node E with the node identities in the identity quadruple. Specifically, the node identities in the identity quadruple are compared with the local ID in the sequence of ID_{Source}-->ID_{Destination}-->ID_{SW-first}-->ID_{SW-last}, so as to determine the communication path role of the node E. In this example, the node E determines that the communication path role of the node E is the communication destination node, queries a key in the sequence of ID_{Source}--> ID_{SW-first}-->ID_{SW-last}, and finally finds a key taking ID_{SW-last} as index, and the node E receives the data packet, and utilizes the key to decrypt the data packet.

Thus, the data packet is transmitted between the node A and the node B, between the node B and the node C, between the node C and the node D, and between the node D and the node E in a the form of encrypted data packet, thereby achieving privacy communication from the node A to the node E. For the node A to the node E, when each node executes transmission processing operation or receiving processing operation, a unified flow is used to complete an entire process of privacy communication, and it is unnecessary to determine communication types, thereby reducing complexity of the flow and improving inter-node privacy communication efficiency. In addition, the method takes the node identity as the index to store the key, and a corresponding key searching method is configured according to the communication path role of the node, such that the key may be queried only according to the node identity when the key is to be queried, and it is unnecessary to determine the inter-node key types, thereby improving key searching efficiency, and further improving inter-node privacy communication efficiency.

What is described above is the specific implementation of the inter-node privacy communication method provided by the embodiments of the present disclosure. Correspondingly, an embodiment of the present disclosure further provides a network node. Understandably, the network node may be configured for a station or a switch device. The network node provided by the embodiment of the present disclosure will be described below from the perspective of functional modularization.

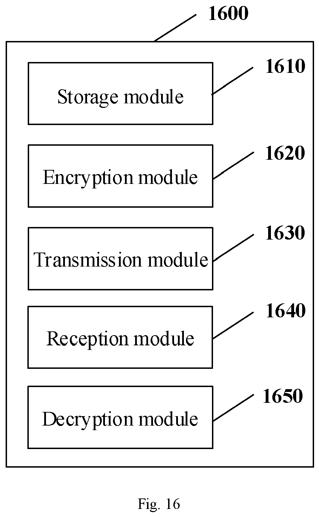

With reference to a structural schematic diagram of a network node 1600 shown in Fig. 16, the node is applied to a station, and includes: a storage module 1610 configured for, after a key between the network node and an opposite-end network node is established, taking a node identity of the opposite-end network node as index to store the key.

The node further includes: an encryption module 1620 configured for obtaining a key for encryption according to a node identities in an identity quadruple and encrypting a data packet when a communication path role of the node in current inter-node privacy communication is a communication source node, where the communication path role is determined according to the node identity of the node, and the identity quadruple is determined according to inter-node switching path information; a transmission module 1630 configured for transmitting an encrypted data packet; and/or, a reception module 1640 configured for receiving the data packet; and a decryption module 1650 configured for obtaining a key for decryption according to the node identities in the identity quadruple and decrypting the data packet when the communication path role of the node in the current inter-node privacy communication is a communication destination node.

On the basis of the above content description, it may be seen that a structure of the node may include several cases as follows.

In a first case, the node includes the storage module 1610, the encryption module 1620 and the transmission module 1630, and in this case, the node has a function of a transmission node and is mainly configured for transmitting the data packet.

In a second case, the node includes the storage module 1610, the reception module 1640 and the decryption module 1650, and in this case, the node has a function of a reception node, and is mainly configured for receiving the data packet.

In a third case, the node includes the storage module 1610, the encryption module 1620, the transmission module 1630, the reception module 1640 and the decryption module 1650, and in this case, the node has functions of both the transmission node and the reception node and is mainly configured for transmitting and receiving the data packet.

It should be noted that when the node has the functions of both the transmission node and the reception node, the encryption module 1620 and the decryption module 1650 may be integrated into one module, such as an encryption and decryption module, and the transmission module 1630 and the reception module 1640 may be integrated into one module, such as a reception and transmission module.

The storage module 1610 may be a random access memory (RAM), and key information is configured into a key RAM to be stored in the form of the RAM. It should be noted that the key information is stored by taking a node identity of an opposite-end network node as index.

In some possible implementations, the encryption module 1620 is further configured for: obtaining the key for encryption according to the node identities in the identity quadruple and encrypting the data packet when the communication path role of the node in the current inter-node privacy communication is a first switch device of communication path or a last switch device of communication path and an end-to-end privacy communication policy is invalid.

The transmission module 1630 is further configured for: transmitting the encrypted data packet when the communication path role of the node in the current inter-node privacy communication is a first switch device of communication path or a last switch device of communication path and an end-to-end privacy communication policy is invalid; directly transmitting a data packet to be transmitted when the communication path role of the node in the current inter-node privacy communication is the first switch device of communication path or the last switch device of communication path and the end-to-end privacy communication policy is valid; and directly transmitting the data packet to be transmitted when the communication path role of the node in the current inter-node privacy communication is a middle switch device of communication path; and/or, the reception module 1640 is further configured for: directly receiving a data packet to be received when the communication path role of the node in the current inter-node privacy communication is the last switch device of communication path or the first switch device of communication path and the end-to-end privacy communication policy is valid; receiving a data packet to be decrypted when the communication path role of the node in the current inter-node privacy communication is the last switch device of communication path or the first switch device of communication path and the end-to-end privacy communication policy is invalid; and directly receiving the data packet to be received when the communication path role of the node in the current inter-node privacy communication is the middle switch device of communication path.

The decryption module 1650 is further configured for: obtaining the key for decryption according to the node identities in the identity quadruple and decrypting the data packet when the communication path role of the node in the current inter-node privacy communication is the last switch device of communication path or the first switch device of communication path and the end-to-end privacy communication policy is invalid.

In some possible implementations, the node further includes a determination module.

The determination module is configured for: determining whether a node identity of the communication source node and/or a node identity of the communication destination node in the identity quadruple in the current inter-node privacy communication is equal to the node identity of the node to obtain a first determination result, and determining that the communication path role of the node in the current inter-node privacy communication is the communication source node or the communication destination node in a case that the first determination result is yes.

In another possible implementations, the node further includes a determination module.

The determination module is configured for: determining whether a node identity of the communication source node and/or a node identity of the communication destination node in the identity quadruple in the current inter-node privacy communication is equal to the node identity of the node to obtain a first determination result, and determining that the communication path role of the node in the current inter-node privacy communication is the communication source node or the communication destination node in a case that the first determination result is yes; determining whether a node identity of the first switch device in the identity quadruple in the current inter-node privacy communication is equal to the node identity of the node to obtain a second determination result in a case that the first determination result is no, and determining that the communication path role of the node in the current inter-node privacy communication is the first switch device of communication path in a case that the second determination result is yes; determining whether a node identity of the last switch device in the identity quadruple in the current inter-node privacy communication is equal to the node identity of the node to obtain a third determination result in a case that the second determination result is no, and determining that the communication path role of the node in the current inter-node privacy communication is the last switch device of communication path in a case that the third determination result is yes; and determining that the communication path role of the node in the current inter-node privacy communication is the middle switch device of communication path in a case that the third determination result is no.

Alternatively, the determination module is further configured for: determining whether the node identity of the last switch device in the identity quadruple in the current inter-node privacy communication is equal to the node identity of the node to obtain a fourth determination result in a case that the first determination result is no, and determining that the communication path role of the node in the current inter-node privacy communication is the last switch device of communication path in a case that the fourth determination result is yes; determining whether the node identity of the first switch device of communication path in the identity quadruple in the current inter-node privacy communication is equal to the node identity of the node to obtain a fifth determination result in a case that the fourth determination result is no, and determining that the communication path role of the node in the current inter-node privacy communication is the first switch device of communication path in a case that the fifth determination result is yes; and determining that the communication path role of the node in the current inter-node privacy communication is the middle switch device of communication path in a case that the fifth determination result is no.

In some possible implementations, the encryption module 1620 is specifically configured for: sequentially determining, in the sequence of the communication destination node, the last switch device and the first switch device or the sequence of the communication destination node, the first switch device and the last switch device in the identity quadruple, whether the node stores a key taking one of the node identities of the above nodes in the identity quadruple as index in a case that the communication path role of the node in the current inter-node privacy communication is the communication source node; and/or, the decryption module 1650 is specifically configured for: sequentially determining, in the sequence of the communication source node, the first switch device and the last switch device or the sequence of the communication source node, the last switch device and the first switch device in the identity quadruple, whether the node stores a keys taking one of the node identities of the above nodes in the identity quadruple as index in a case that the communication path role of the node in the current inter-node privacy communication is the communication destination node.

In another possible implementations, the encryption module 1620 is specifically configured for: sequentially determining, in the sequence of the communication destination node, the last switch device and the first switch device or the sequence of the communication destination node, the first switch device and the last switch device in the identity quadruple, whether the node stores a keys taking one of the node identities of the above nodes in the identity quadruple as index in a case that the communication path role of the node in the current inter-node privacy communication is the communication source node; sequentially determining, in the sequence of the communication destination node and the last switch device or the sequence of the last switch device and the communication destination node in the identity quadruple, whether the node stores a keys taking one of the node identities of the above nodes in the identity quadruple as index in a case that the communication path role of the node in the current inter-node privacy communication is the first switch device of communication path; and determining whether the node stores a key taking the node identity of the communication destination node in the identity quadruple as index in a case that the communication path role of the node in the current inter-node privacy communication is the last switch device of communication path; and/or, the decryption module 1650 is specifically configured for: sequentially determining, in the sequence of the communication source node, the first switch device and the last switch device or the sequence of the communication source node, the last switch device and the first switch device in the identity quadruple, whether the node stores a key taking one of the node identities of the above nodes in the identity quadruple as index in a case that the communication path role of the node in the current inter-node privacy communication is the communication destination node; sequentially determining, in the sequence of the communication source node and the first switch device or the sequence of the first switch device and the communication source node in the identity quadruple, whether the node stores a key taking one of the node identities of the above nodes in the identity quadruple as index in a case that the communication path role of the node in the current inter-node privacy communication is the last switch device of communication path; and determining whether the node stores a key taking the node identity of the communication source node in the identity quadruple as index in a case that the communication path role of the node in the current inter-node privacy communication is the first switch device of communication path.

In some possible implementations, the node identity includes a medium access control address of the node.

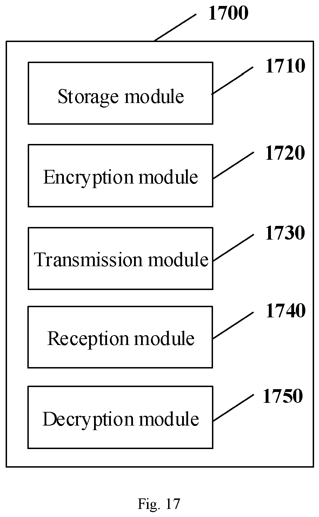

Next, with reference to a structural schematic diagram of a network node 1700 shown in Fig. 17, the node is configured for a switch device and includes: a storage module 1710 configured for, after a key between the network node and an opposite-end network node is established, taking a node identity of the opposite-end network node as index to store the key.

The node further includes: an encryption module 1720 configured for obtaining a key for encryption according to a node identities in an identity quadruple and encrypting a data packet when a communication path role of the node in current inter-node privacy communication is a first switch device of communication path or a last switch device of communication path and an end-to-end privacy communication policy is invalid, the communication path role being determined according to the node identity of the node, and the identity quadruple being determined according to inter-node switching path information; a transmission module 1730 configured for transmitting an encrypted data packet when the communication path role of the node in the current inter-node privacy communication is the first switch device of communication path or the last switch device of communication path and the end-to-end privacy communication policy is invalid; directly transmitting a data packet to be transmitted when the communication path role of the node in the current inter-node privacy communication is the first switch device of communication path or the last switch device of communication path and the end-to-end privacy communication policy is valid; and directly transmitting the data packet to be transmitted when the communication path role of the node in the current inter-node privacy communication is a middle switch device of communication path; and/or, a reception module 1740 configured for directly receiving a data packet to be received when the communication path role of the node in the current inter-node privacy communication is the last switch device of communication path or the first switch device of communication path and the end-to-end privacy communication policy is valid; receiving a data packet to be decrypted when the communication path role of the node in the current inter-node privacy communication is the last switch device of communication path or the first switch device of communication path and the end-to-end privacy communication policy is invalid; and directly receiving the data packet to be received when the communication path role of the node in the current inter-node privacy communication is the middle switch device of communication path; and a decryption module 1750 configured for obtaining a key for decryption according to the node identities in the identity quadruple and decrypting the data packet when the communication path role of the node in the current inter-node privacy communication is the last switch device of communication path or the first switch device of communication path and the end-to-end privacy communication policy is invalid.

On the basis of the above content description, it may be seen that a structure of the node may include the following several cases.

In a first case, the node includes the storage module 1710, the encryption module 1720 and the transmission module 1730, and in this case, the node has a function of a transmission node and is mainly configured for transmitting the data packet.

In a second case, the node includes the storage module 1710, the reception module 1740 and the decryption module 1750, and in this case, the node has a function of a reception node, and is mainly configured for receiving the data packet.

In a third case, the node includes the storage module 1710, the encryption module 1720, the transmission module 1730, the reception module 1740 and the decryption module 1750, and in this case, the node has functions of both the transmission node and the reception node and is mainly configured for transmitting and receiving the data packet.

It should be noted that when the node has the functions of both the transmission node and the reception node, the encryption module 1720 and the decryption module 1750 may be integrated into one module, such as an encryption and decryption module, and the transmission module 1730 and the reception module 1740 may be integrated into one module, such as a reception and transmission module.

The storage module 1710 may be a random access memory (RAM), and key information is configured into a key RAM to be stored in the form of the RAM. It should be noted that the key information is stored by taking a node identity of an opposite-end network node as index.

In some possible implementations, the encryption module 1720 is further configured for: obtaining the key for encryption according to the node identities in the identity quadruple and encrypting the data packet when the communication path role of the node in the current inter-node privacy communication is a communication source node; and/or, the decryption module 1750 is further configured for: obtaining the key for decryption according to the node identities in the identity quadruple and decrypting the data packet when the communication path role of the node in the current inter-node privacy communication is a communication destination node.

In some possible implementations, the node further includes a determination module, where the determination module is configured for: determining whether a node identity of the first switch device in the identity quadruple in the current inter-node privacy communication is equal to the node identity of the node to obtain a second determination result, and determining that the communication path role of the node in the current inter-node privacy communication is the first switch device of communication path in a case that the second determination result is yes; determining whether a node identity of the last switch device in the identity quadruple in the current inter-node privacy communication is equal to the node identity of the node to obtain a third determination result in a case that the second determination result is no, and determining that the communication path role of the node in the current inter-node privacy communication is the last switch device of communication path in a case that the third determination result is yes; and determining that the communication path role of the node in the current inter-node privacy communication is the middle switch device of communication path in a case that the third determination result is no.

Alternatively, the determination module is further configured for determining whether the node identity of the last switch device in the identity quadruple in the current inter-node privacy communication is equal to the node identity of the node to obtain a fourth determination result, and determining that the communication path role of the node in the current inter-node privacy communication is the last switch device of communication path in a case that the fourth determination result is yes; determining whether the node identity of the first switch device in the identity quadruple in the current inter-node privacy communication is equal to the node identity of the node to obtain a fifth determination result in a case that the fourth determination result is no, and determining that the communication path role of the node in the current inter-node privacy communication is the first switch device of communication path in a case that the fifth determination result is yes; and determining that the communication path role of the node in the current inter-node privacy communication is the middle switch device of communication path in a case that the fifth determination result is no.

In another possible implementations, the node further includes a determination module.

The determination module is configured for: determining whether a node identity of the communication source node and/or a node identity of the communication destination node in the identity quadruple in the current inter-node privacy communication is equal to the node identity of the node to obtain a first determination result, and determining that the communication path role of the node in the current inter-node privacy communication is the communication source node or the communication destination node in a case that the first determination result is yes; determining whether a node identity of the first switch device in the identity quadruple in the current inter-node privacy communication is equal to the node identity of the node to obtain a second determination result in a case that the first determination result is no, and determining that the communication path role of the node in the current inter-node privacy communication is the first switch device of communication path in a case that the second determination result is yes; determining whether a node identity of the last switch device in the identity quadruple in the current inter-node privacy communication is equal to the node identity of the node to obtain a third determination result in a case that the second determination result is no, and determining that the communication path role of the node in the current inter-node privacy communication is the last switch device of communication path in a case that the third determination result is yes; and determining that the communication path role of the node in the current inter-node privacy communication is the middle switch device of communication path in a case that the third determination result is no.

Alternatively, the determination module is further configured for: determining whether the node identity of the last switch device in the identity quadruple in the current inter-node privacy communication is equal to the node identity of the node to obtain a fourth determination result in a case that the first determination result is no, and determining that the communication path role of the node in the current inter-node privacy communication is the last switch device of communication path in a case that the fourth determination result is yes; determining whether the node identity of the first switch device in the identity quadruple in the current inter-node privacy communication is equal to the node identity of the node to obtain a fifth determination result in a case that the fourth determination result is no, and determining that the communication path role of the node in the current inter-node privacy communication is the first switch device of communication path in a case that the fifth determination result is yes; and determining that the communication path role of the node in the current inter-node privacy communication is the middle switch device of communication path in a case that the fifth determination result is no.

In some possible implementations, the encryption module 1720 is specifically configured for: sequentially determining, in the sequence of the communication destination node and the last switch device or the sequence of the last switch device and the communication destination node in the identity quadruple, whether the node stores a key taking one of the node identities of the above nodes in the identity quadruple as index in a case that the communication path role of the node in the current inter-node privacy communication is the first switch device of communication path; and determining whether the node stores a key taking the node identity of the communication destination node in the identity quadruple as index in a case that the communication path role of the node in the current inter-node privacy communication is the last switch device of communication path; and/or, the decryption module 1750 is specifically configured for: sequentially determining, in the sequence of the communication source node and the first switch device or the sequence of the first switch device and the communication source node in the identity quadruple, whether the node stores a key taking one of the node identities of the above nodes in the identity quadruple as index in a case that the communication path role of the node in the current inter-node privacy communication is the last switch device of communication path; and determining whether the node stores a key taking the node identity of the communication source node in the identity quadruple as index in a case that the communication path role of the node in the current inter-node privacy communication is the first switch device of communication path.

In another possible implementations, the encryption module 1720 is specifically configured for: sequentially determining, in the sequence of the communication destination node, the last switch device and the first switch device or the sequence of the communication destination node, the first switch device and the last switch device in the identity quadruple, whether the node stores a key taking one of the node identities of the above nodes in the identity quadruple as index in a case that the communication path role of the node in the current inter-node privacy communication is the communication source node; sequentially determining, in the sequence of the communication destination node and the last switch device or the sequence of the last switch device and the communication destination node in the identity quadruple, whether the node stores a key taking one of the node identities of the above nodes in the identity quadruple as index in a case that the communication path role of the node in the current inter-node privacy communication is the first switch device of communication path; and determining whether the node stores a key taking the node identity of the communication destination node in the identity quadruple as index in a case that the communication path role of the node in the current inter-node privacy communication is the last switch device of communication path; and/or, the decryption module 1750 is specifically configured for: sequentially determining, in the sequence of the communication source node, the first switch device and the last switch device or the sequence of the communication source node, the last switch device and the first switch device in the identity quadruple, whether the node stores a key taking one of the node identities of the above nodes in the identity quadruple as index in a case that the communication path role of the node in the current inter-node privacy communication is the communication destination node; sequentially determining, in the sequence of the communication source node and the first switch device or the sequence of the first switch device and the communication source node in the identity quadruple, whether the node stores a key taking one of the node identities of the above nodes in the identity quadruple as index in a case that the communication path role of the node in the current inter-node privacy communication is the last switch device of communication path; and determining whether the node stores a key taking the node identity of the communication source node in the identity quadruple as index in a case that the communication path role of the node in the current inter-node privacy communication is the first switch device of communication path.

In some possible implementations, the node identity includes a medium access control address of the node.

Those skilled in the pertinent field may clearly understand that for convenience and brevity of description, specific working processes of the above systems, apparatuses and units may refer to corresponding processes in the foregoing method embodiments, which is not described herein.

## Claims

1. An inter-node privacy communication method, wherein communication path roles of inter-node privacy communication comprise a communication source node, a first switch device of communication path, a middle switch device of communication path, a last switch device of communication path, and a communication destination node, any network node in a network establishes a key with an opposite-end network node and takes a node identity of the opposite-end network node as index to store the key, and the privacy communication method is configured for a transmission node and comprises:
when a communication path role of a node in current inter-node privacy communication is the communication source node, obtaining a key for encryption according to node identities in an identity quadruple, and encrypting and transmitting a data packet;
when the communication path role of the node in the current inter-node privacy communication is the first switch device of communication path or the last switch device of communication path and an end-to-end privacy communication policy is valid, directly transmitting a data packet to be transmitted; when the communication path role of the node in the current inter-node privacy communication is the first switch device of communication path or the last switch device of communication path and the end-to-end privacy communication policy is invalid, obtaining the key for encryption according to the node identities in the identity quadruple, and encrypting and transmitting the data packet; and
when the communication path role of the node in the current inter-node privacy communication is the middle switch device of communication path, directly transmitting the data packet to be transmitted;
wherein a communication path role of the transmission node in the current inter-node privacy communication is determined according to a node identity of the transmission node, and the identity quadruple is determined according to inter-node switching path information.

2. The method according to claim 1, wherein the communication path role of the transmission node in the current inter-node privacy communication is determined by:
determining whether a node identity of the communication source node in the identity quadruple in the current inter-node privacy communication is equal to the node identity of the transmission node to obtain a first determination result, and determining that the communication path role of the transmission node in the current inter-node privacy communication is the communication source node in a case that the first determination result is yes;
determining whether a node identity of the first switch device in the identity quadruple in the current inter-node privacy communication is equal to the node identity of the transmission node to obtain a second determination result in a case that the first determination result is no, and determining that the communication path role of the transmission node in the current inter-node privacy communication is the first switch device of communication path in a case that the second determination result is yes;
determining whether a node identity of the last switch device in the identity quadruple in the current inter-node privacy communication is equal to the node identity of the transmission node to obtain a third determination result in a case that the second determination result is no, and determining that the communication path role of the transmission node in the current inter-node privacy communication is the last switch device of communication path in a case that the third determination result is yes; and
determining that the communication path role of the transmission node in the current inter-node privacy communication is the middle switch device of communication path in a case that the third determination result is no;
or, determining whether the node identity of the last switch device in the identity quadruple in the current inter-node privacy communication is equal to the node identity of the transmission node to obtain a fourth determination result in a case that the first determination result is no, and determining that the communication path role of the transmission node in the current inter-node privacy communication is the last switch device of communication path in a case that the fourth determination result is yes;
determining whether the node identity of the first switch device in the identity quadruple in the current inter-node privacy communication is equal to the node identity of the transmission node to obtain a fifth determination result in a case that the fourth determination result is no, and determining that the communication path role of the transmission node in the current inter-node privacy communication is the first switch device of communication path in a case that the fifth determination result is yes; and
determining that the communication path role of the transmission node in the current inter-node privacy communication is the middle switch device of communication path in a case that the fifth determination result is no.

3. The method according to claim 1, wherein the obtaining the key for encryption according to the node identities in the identity quadruple comprises:
sequentially determining, in the sequence of the communication destination node, the last switch device and the first switch device or the sequence of the communication destination node, the first switch device and the last switch device in the identity quadruple, whether the transmission node stores keys taking node identities of the above nodes in the identity quadruple as indexes in a case that the communication path role of the transmission node in the current inter-node privacy communication is the communication source node;
sequentially determining, in the sequence of the communication destination node and the last switch device or the sequence of the last switch device and the communication destination node in the identity quadruple, whether the transmission node stores keys taking node identities of the above nodes in the identity quadruple as indexes in a case that the communication path role of the transmission node in the current inter-node privacy communication is the first switch device of communication path; and
determining whether the transmission node stores a key taking a node identity of the communication destination node in the identity quadruple as index in a case that the communication path role of the transmission node in the current inter-node privacy communication is the last switch device of communication path.

4. The method according to any one of claims 1 to 3, wherein the node identity comprises a medium access control address of the node.

5. An inter-node privacy communication method, wherein communication path roles of inter-node privacy communication comprise a communication source node, a first switch device of communication path, a middle switch device of communication path, a last switch device of communication path, and a communication destination node, any network node in a network establishes a key with an opposite-end network node and takes a node identity of the opposite-end network node as index to store the key, and the privacy communication method is configured for a reception node and comprises:
when the communication path role of the node in current inter-node privacy communication is the communication destination node, obtaining a key for decryption according to node identities in an identity quadruple, and receiving and decrypting a data packet;
when the communication path role of the node in the current inter-node privacy communication is the last switch device or the first switch device of communication path and an end-to-end privacy communication policy is valid, directly receiving a data packet to be received; when the communication path role of the node in the current inter-node privacy communication is the last switch device of communication path or the first switch device of communication path and the end-to-end privacy communication policy is invalid, obtaining the key for decryption according to the node identities in the identity quadruple, and receiving and decrypting the data packet; and
when the communication path role of the node in the current inter-node privacy communication is the middle switch device of communication path, directly receiving the data packet to be received;
wherein the communication path role of the reception node in the current inter-node privacy communication is determined according to a node identity of the reception node, and the identity quadruple is determined according to inter-node switching path information.

6. The method according to claim 5, wherein the communication path role of the reception node in the current inter-node privacy communication is determined by:
determining whether a node identity of the communication destination node in the identity quadruple in the current inter-node privacy communication is equal to the node identity of the reception node to obtain a first determination result, and determining that the communication path role of the reception node in the current inter-node privacy communication is the communication destination node in a case that the first determination result is yes;
determining whether a node identity of the last switch device in the identity quadruple in the current inter-node privacy communication is equal to the node identity of the reception node to obtain a second determination result in a case that the first determination result is no, and determining that the communication path role of the reception node in the current inter-node privacy communication is the last switch device of communication path in a case that the second determination result is yes;
determining whether a node identity of the first switch device in the identity quadruple in the current inter-node privacy communication is equal to the node identity of the reception node to obtain a third determination result in a case that the second determination result is no, and determining that the communication path role of the reception node in the current inter-node privacy communication is the first switch device of communication path in a case that the third determination result is yes; and
determining that the communication path role of the reception node in the current inter-node privacy communication is the middle switch device of communication path in a case that the third determination result is no;
or, determining whether the node identity of the first switch device in the identity quadruple in the current inter-node privacy communication is equal to the node identity of the reception node to obtain a fourth determination result in a case that the first determination result is no, and determining that the communication path role of the reception node in the current inter-node privacy communication is the first switch device of communication path in a case that the fourth determination result is yes;
determining whether the node identity of the last switch device in the identity quadruple in the current inter-node privacy communication is equal to the node identity of the reception node to obtain a fifth determination result in a case that the fourth determination result is no, and determining that the communication path role of the reception node in the current inter-node privacy communication is the last switch device of communication path in a case that the fifth determination result is yes; and
determining that the communication path role of the reception node in the current inter-node privacy communication is the middle switch device of communication path in a case that the fifth determination result is no.

7. The method according to claim 5, wherein the obtaining the key for decryption according to the node identities in the identity quadruple comprises:
sequentially determining, in the sequence of the communication source node, the first switch device and the last switch device or the sequence of the communication source node, the last switch device and the first switch device in the identity quadruple, whether the reception node stores keys taking node identities of the above nodes in the identity quadruple as indexes in a case that the communication path role of the reception node in the current inter-node privacy communication is the communication destination node;
sequentially determining, in the sequence of the communication source node and the first switch device or the sequence of the first switch device and the communication source node in the identity quadruple, whether the reception node stores keys taking node identities of the above nodes in the identity quadruple as indexes in a case that the communication path role of the reception node in the current inter-node privacy communication is the last switch device of communication path; and
determining whether the reception node stores a key taking a node identity of the communication source node in the identity quadruple as index in a case that the communication path role of the reception node in the current inter-node privacy communication is the first switch device of communication path.

8. The method according to any one of claims 5 to 7, wherein the node identity comprises a medium access control address of the node.

9. An inter-node privacy communication method, wherein communication path roles of inter-node privacy communication comprise a communication source node, a first switch device of communication path, a middle switch device of communication path, a last switch device of communication path, and a communication destination node, any network node in a network establishes a key with an opposite-end network node and takes a node identity of the opposite-end network node as index to store the key, and the privacy communication method comprises:
when the communication path role of a node in current inter-node privacy communication is the communication source node, obtaining a key for encryption according to node identities in an identity quadruple, and encrypting and transmitting a data packet;
when the communication path role of the node in current inter-node privacy communication is the communication destination node, obtaining a key for decryption according to the node identities in the identity quadruple, and receiving and decrypting the data packet;
when the communication path role of the node in the current inter-node privacy communication is the first switch device of communication path or the last switch device of communication path and an end-to-end privacy communication policy is valid, directly forwarding the data packet; when the communication path role of the node in the current inter-node privacy communication is the first switch device of communication path or the last switch device of communication path and the end-to-end privacy communication policy is invalid, obtaining the key for decryption according to the node identities in the identity quadruple, receiving and decrypting the data packet, and then obtaining the key for encryption according to the node identities in the identity quadruple, and encrypting and transmitting the data packet; and
when the communication path role of the node in the current inter-node privacy communication is the middle switch device of communication path, directly forwarding the data packet;
wherein the communication path role of the node in the current inter-node privacy communication is determined according to the node identity of the node, and the identity quadruple is determined according to inter-node switching path information.

10. The method according to claim 9, wherein the communication path role of the node in the current inter-node privacy communication is determined by:
determining whether a node identity of the communication source node in the identity quadruple in the current inter-node privacy communication is equal to the node identity of the node to obtain a first determination result, and determining that the communication path role of the node in the current inter-node privacy communication is the communication source node in a case that the first determination result is yes;
determining whether a node identity of the communication destination node in the identity quadruple in the current inter-node privacy communication is equal to the node identity of the node to obtain a second determination result in a case that the first determination result is no, and determining that the communication path role of the node in the current inter-node privacy communication is the communication destination node in a case that the second determination result is yes;
or, determining whether the node identity of the communication destination node in the identity quadruple in the current inter-node privacy communication is equal to the node identity of the node to obtain a third determination result, and determining that the communication path role of the node in the current inter-node privacy communication is the communication destination node in a case that the third determination result is yes;
determining whether the node identity of the communication source node in the identity quadruple in the current inter-node privacy communication is equal to the node identity of the node to obtain a fourth determination result in a case that the third determination result is no, and determining that the communication path role of the node in the current inter-node privacy communication is the communication source node in a case that the fourth determination result is yes;
determining whether a node identity of the first switch device in the identity quadruple in the current inter-node privacy communication is equal to the node identity of the node to obtain a fifth determination result in a case that the second determination result or the fourth determination result is no, and determining that the communication path role of the node in the current inter-node privacy communication is the first switch device of communication path in a case that the fifth determination result is yes; and
determining whether a node identity of the last switch device in the identity quadruple in the current inter-node privacy communication is equal to the node identity of the node to obtain a sixth determination result in a case that the fifth determination result is no, and determining that the communication path role of the node in the current inter-node privacy communication is the last switch device of communication path in a case that the sixth determination result is yes; and
determining that the communication path role of the node in the current inter-node privacy communication in the identity quadruple is the middle switch device of communication path in a case that the sixth determination result is no;
or, determining whether the node identity of the last switch device in the identity quadruple in the current inter-node privacy communication is equal to the node identity of the node to obtain a seventh determination result in a case that the second determination result or the fourth determination result is no, and determining that the communication path role of the node in the current inter-node privacy communication is the last switch device of communication path in a case that the seventh determination result is yes; and
determining whether the node identity of the first switch device in the identity quadruple in the current inter-node privacy communication is equal to the node identity of the node to obtain an eighth determination result in a case that the seventh determination result is no, and determining that the communication path role of the node in the current inter-node privacy communication is the first switch device of communication path in a case that the eighth determination result is yes; and
determining that the communication path role of the node in the current inter-node privacy communication is the middle switch device of communication path in a case that the eighth determination result is no.

11. The method according to claim 9, wherein when the communication path role of the node in current inter-node privacy communication is the communication source node, the obtaining the key for encryption according to the node identities in the identity quadruple comprises:
sequentially determining, in the sequence of the communication destination node, the last switch device and the first switch device or the sequence of the communication destination node, the first switch device and the last switch device in the identity quadruple, whether the node stores a key taking one of node identities of the above nodes in the identity quadruple as index;
when the communication path role of the node in the current inter-node privacy communication is the communication destination node, the obtaining the key for decryption according to the node identities in the identity quadruple comprises:
sequentially determining, in the sequence of the communication source node, the first switch device and the last switch device or the sequence of the communication source node, the last switch device and the first switch device in the identity quadruple, whether the node stores a key taking one of node identities of the above nodes in the identity quadruple as index;
when the communication path role of the node in the current inter-node privacy communication is the last switch device of communication path, the obtaining the key for decryption according to the node identities in the identity quadruple comprises: sequentially determining, in the sequence of the communication source node and the first switch device or the sequence of the first switch device and the communication source node in the identity quadruple, whether the node stores a key taking one of node identities of the above nodes in the identity quadruple as index; the obtaining the key for encryption according to the node identities in the identity quadruple comprises: determining whether the node stores a key taking a node identity of the communication destination node in the identity quadruple as index;
when the communication path role of the node in the current inter-node privacy communication is the first switch device of communication path, the obtaining the key for decryption according to the node identities in the identity quadruple comprises: determining whether the node stores a key taking a node identity of the communication source node in the identity quadruple as index; and the obtaining the key for encryption according to the node identities in the identity quadruple comprises: sequentially determining, in the sequence of the communication destination node and the last switch device or the sequence of the last switch device and the communication destination node, whether the node stores a key taking one of node identities of the above nodes in the identity quadruple as index.

12. A network node, applied to a terminal and comprising:
a storage module configured for, after a key is established with an opposite-end network node, taking a node identity of the opposite-end network node as index to store the key, wherein
the node further comprises:
an encryption module configured for obtaining a key for encryption according to node identities in an identity quadruple and encrypting a data packet when a communication path role of the node in current inter-node privacy communication is a communication source node, wherein the communication path role is determined according to a node identity of the node, and the identity quadruple is determined according to inter-node switching path information;
a transmission module configured for transmitting the encrypted data packet;
and/or,
a reception module configured for receiving a data packet; and
a decryption module configured for obtaining a key for decryption according to node identities in an identity quadruple and decrypting the data packet when a communication path role of the node in current inter-node privacy communication is a communication destination node.

13. The node according to claim 12, wherein the encryption module is further configured for:
obtaining the key for encryption according to the node identities in the identity quadruple and encrypting the data packet when the communication path role of the node in the current inter-node privacy communication is a first switch device of communication path or a last switch device of communication path and an end-to-end privacy communication policy is invalid;
the transmission module is further configured for:
transmitting the encrypted data packet when the communication path role of the node in the current inter-node privacy communication is a first switch device or a last switch device of communication path and an end-to-end privacy communication policy is invalid; directly transmitting a data packet to be transmitted when the communication path role of the node in the current inter-node privacy communication is the first switch device of communication path or the last switch device of communication path and the end-to-end privacy communication policy is valid; and
directly transmitting the data packet to be transmitted when the communication path role of the node in the current inter-node privacy communication is a middle switch device of communication path;
and/or,
the reception module is further configured for:
directly receiving a data packet to be received when the communication path role of the node in the current inter-node privacy communication is a last switch device of communication path or a first switch device of communication path and the end-to-end privacy communication policy is valid; receiving a data packet to be decrypted when the communication path role of the node in the current inter-node privacy communication is the last switch device of communication path or the first switch device of communication path and the end-to-end privacy communication policy is invalid; and
directly receiving the data packet to be received when the communication path role of the node in the current inter-node privacy communication is the middle switch device of communication path; and
the decryption module is further configured for: obtaining the key for decryption according to the node identities in the identity quadruple and decrypting the data packet when the communication path role of the node in the current inter-node privacy communication is the last switch device of communication path or the first switch device of communication path and the end-to-end privacy communication policy is invalid.

14. The node according to claim 12, further comprising a determination module, wherein
the determination module is configured for:
determining whether a node identity of the communication source node and/or a node identity of the communication destination node in the identity quadruple in the current inter-node privacy communication is equal to the node identity of the node to obtain a first determination result, and determining that the communication path role of the node in the current inter-node privacy communication is the communication source node or the communication destination node in a case that the first determination result is yes.

15. The node according to claim 13, further comprising a determination module, wherein
the determination module is configured for:
determining whether a node identity of the communication source node and/or a node identity of the communication destination node in the identity quadruple in the current inter-node privacy communication is equal to the node identity of the node to obtain a first determination result, and determining that the communication path role of the node in the current inter-node privacy communication is the communication source node or the communication destination node in a case that the first determination result is yes;
determining whether a node identity of the first switch device in the identity quadruple in the current inter-node privacy communication is equal to the node identity of the node to obtain a second determination result in a case that the first determination result is no, and determining that the communication path role of the node in the current inter-node privacy communication is the first switch device of communication path in a case that the second determination result is yes;
determining whether a node identity of the last switch device in the identity quadruple in the current inter-node privacy communication is equal to the node identity of the node to obtain a third determination result in a case that the second determination result is no, and determining that the communication path role of the node in the current inter-node privacy communication is the last switch device of communication path in a case that the third determination result is yes; and
determining that the communication path role of the node in the current inter-node privacy communication is the middle switch device of communication path in a case that the third determination result is no;
or, determining whether the node identity of the last switch device in the identity quadruple in the current inter-node privacy communication is equal to the node identity of the node to obtain a fourth determination result in a case that the first determination result is no, and determining that the communication path role of the node in the current inter-node privacy communication is the last switch device of communication path in a case that the fourth determination result is yes;
determining whether the node identity of the first switch device in the identity quadruple in the current inter-node privacy communication is equal to the node identity of the node to obtain a fifth determination result in a case that the fourth determination result is no, and determining that the communication path role of the node in the current inter-node privacy communication is the first switch device of communication path in a case that the fifth determination result is yes; and
determining that the communication path role of the node in the current inter-node privacy communication is the middle switch device of communication path in a case that the fifth determination result is no.

16. The node according to claim 12, wherein the encryption module is further configured for:
sequentially determining, in the sequence of the communication destination node, the last switch device and the first switch device or the sequence of the communication destination node, the first switch device and the last switch device in the identity quadruple, whether the node stores keys taking node identities of the above nodes in the identity quadruple as indexes in a case that the communication path role of the node in the current inter-node privacy communication is the communication source node;
and/or,
the decryption module is further configured for:
sequentially determining, in the sequence of the communication source node, the first switch device and the last switch device or the sequence of the communication source node, the last switch device and the first switch device in the identity quadruple, whether the node stores keys taking node identities of the above nodes in the identity quadruple as indexes in a case that the communication path role of the node in the current inter-node privacy communication is the communication destination node.

17. The node according to claim 13, wherein the encryption module is further configured for:
sequentially determining, in the sequence of the communication destination node, the last switch device and the first switch device or the sequence of the communication destination node, the first switch device and the last switch device in the identity quadruple, whether the node stores keys taking node identities of the above nodes in the identity quadruple as indexes in a case that the communication path role of the node in the current inter-node privacy communication is the communication source node;
sequentially determining, in the sequence of the communication destination node and the last switch device or the sequence of the last switch device and the communication destination node in the identity quadruple, whether the node stores keys taking node identities of the above nodes in the identity quadruple as indexes in a case that the communication path role of the node in the current inter-node privacy communication is the first switch device of communication path; and
determining whether the node stores a key taking a node identity of the communication destination node in the identity quadruple as index in a case that the communication path role of the node in the current inter-node privacy communication is the last switch device of communication path;
and/or,
the decryption module is further configured for:
sequentially determining, in the sequence of the communication source node, the first switch device and the last switch device or the sequence of the communication source node, the last switch device and the first switch device in the identity quadruple, whether the node stores keys taking node identities of the above nodes in the identity quadruple as indexes in a case that the communication path role of the node in the current inter-node privacy communication is the communication destination node;
sequentially determining, in the sequence of the communication source node and the first switch device or the sequence of the first switch device and the communication source node in the identity quadruple, whether the node stores keys taking node identities of the above nodes in the identity quadruple as indexes in a case that the communication path role of the node in the current inter-node privacy communication is the last switch device of communication path; and
determining whether the node stores a key taking a node identity of the communication source node in the identity quadruple as index in a case that the communication path role of the node in the current inter-node privacy communication is the first switch device of communication path.

18. The node according to any one of claims 12 to 17, wherein the node identity comprises a medium access control address of the node.

19. A network node, applied to a switch device and comprising:
a storage module configured for, after a key is established with an opposite-end network node, taking a node identity of the opposite-end network node as index to store the key, wherein
the node further comprises:
an encryption module configured for obtaining a key for encryption according to node identities in an identity quadruple and encrypting a data packet when a communication path role of the node in current inter-node privacy communication is a first switch device of communication path or a last switch device of communication path and an end-to-end privacy communication policy is invalid, wherein the communication path role is determined according to a node identity of the node, and the identity quadruple is determined according to inter-node switching path information;
a transmission module configured for transmitting the encrypted data packet when the communication path role of the node in the current inter-node privacy communication is the first switch device of communication path or the last switch device of communication path and the end-to-end privacy communication policy is invalid; directly transmitting a data packet to be transmitted when the communication path role of the node in the current inter-node privacy communication is the first switch device of communication path or the last switch device of communication path and the end-to-end privacy communication policy is valid; and directly transmitting the data packet to be transmitted when the communication path role of the node in the current inter-node privacy communication is a middle switch device of communication path;
and/or,
a reception module configured for directly receiving a data packet to be received when the communication path role of the node in the current inter-node privacy communication is a last switch device of communication path or a first switch device of communication path and the end-to-end privacy communication policy is valid; receiving a data packet to be decrypted when the communication path role of the node in the current inter-node privacy communication is the last switch device of communication path or the first switch device of communication path and the end-to-end privacy communication policy is invalid; and directly receiving the data packet to be received when the communication path role of the node in the current inter-node privacy communication is the middle switch device in the communication path; and
a decryption module configured for obtaining a key for decryption according to the node identities in the identity quadruple and decrypting the data packet when the communication path role of the node in the current inter-node privacy communication is the last switch device of communication path or the first switch device of communication path and the end-to-end privacy communication policy is invalid.

20. The node according to claim 19, wherein the encryption module further configured for:
obtaining the key for encryption according to the node identities in the identity quadruple and encrypting the data packet when the communication path role of the node in the current inter-node privacy communication is the communication source node;
and/or,
the decryption module is further configured for:
obtaining the key for decryption according to the node identities in the identity quadruple and decrypting the data packet when the communication path role of the node in the current inter-node privacy communication is the communication destination node.

21. The node according to claim 19, further comprising a determination module, wherein
the determination module is configured for:
determining whether a node identity of the first switch device in the identity quadruple in the current inter-node privacy communication is equal to the node identity of the node to obtain a second determination result, and determining that the communication path role of the node in the current inter-node privacy communication is the first switch device of communication path in a case that the second determination result is yes;
determining whether a node identity of the last switch device in the identity quadruple in the current inter-node privacy communication is equal to the node identity of the node to obtain a third determination result in a case that the second determination result is no, and determining that the communication path role of the node in the current inter-node privacy communication is the last switch device of communication path in a case that the third determination result is yes; and
determining that the communication path role of the node in the current inter-node privacy communication is the middle switch device in the communication path in a case that the third determination result is no;
or, determining whether the node identity of the last switch device in the identity quadruple in the current inter-node privacy communication is equal to the node identity of the node to obtain a fourth determination result, and determining that the communication path role of the node in the current inter-node privacy communication is the last switch device of communication path in a case that the fourth determination result is yes;
determining whether the node identity of the first switch device in the identity quadruple in the current inter-node privacy communication is equal to the node identity of the node to obtain a fifth determination result in a case that the fourth determination result is no, and determining that the communication path role of the node in the current inter-node privacy communication is the first switch device of communication path in a case that the fifth determination result is yes; and
determining that the communication path role of the node in the current inter-node privacy communication is the middle switch device of communication path in a case that the fifth determination result is no.

22. The node according to claim 20, further comprising a determination module, wherein
the determination module is configured for:
determining whether a node identity of the communication source node and/or a node identity of the communication destination node in the identity quadruple in the current inter-node privacy communication is equal to the node identity of the node to obtain a first determination result, and determining that the communication path role of the node in the current inter-node privacy communication is the communication source node or the communication destination node in a case that the first determination result is yes;
determining whether a node identity of the first switch device in the identity quadruple in the current inter-node privacy communication is equal to the node identity of the node to obtain a second determination result in a case that the first determination result is no, and determining that the communication path role of the node in the current inter-node privacy communication is the first switch device of communication path in a case that the second determination result is yes;
determining whether a node identity of the last switch device in the identity quadruple in the current inter-node privacy communication is equal to the node identity of the node to obtain a third determination result in a case that the second determination result is no, and determining that the communication path role of the node in the current inter-node privacy communication is the last switch device of communication path in a case that the third determination result is yes; and
determining that the communication path role of the node in the current inter-node privacy communication is the middle switch device of communication path in a case that the third determination result is no;
or, determining whether a node identity of the last switch device in the identity quadruple in the current inter-node privacy communication is equal to the node identity of the node to obtain a fourth determination result in a case that the first determination result is no, and determining that the communication path role of the node in the current inter-node privacy communication is the last switch device of communication path in a case that the fourth determination result is yes;
determining whether the node identity of the first switch device in the identity quadruple in the current inter-node privacy communication is equal to the node identity of the node to obtain a fifth determination result in a case that the fourth determination result is no, and determining that the communication path role of the node in the current inter-node privacy communication is the first switch device of communication path in a case that the fifth determination result is yes; and
determining that the communication path role of the node in the current inter-node privacy communication is the middle switch device of communication path in a case that the fifth determination result is no.

23. The node according to claim 19, wherein the encryption module is further configured for:
sequentially determining, in the sequence of the communication destination node and the last switch device or the sequence of the last switch device and the communication destination node in the identity quadruple, whether the node stores keys taking node identities of the above nodes in the identity quadruple as indexes in a case that the communication path role of the node in the current inter-node privacy communication is the first switch device of communication path; and
determining whether the node stores a key taking a node identity of the communication destination node in the identity quadruple as index in a case that the communication path role of the node in the current inter-node privacy communication is the last switch device of communication path;
and/or,
the decryption module is further configured for:
sequentially determining, in the sequence of the communication source node and the first switch device or the sequence of the first switch device and the communication source node in the identity quadruple, whether the node stores keys taking node identities of the above nodes in the identity quadruple as indexes in a case that the communication path role of the node in the current inter-node privacy communication is the last switch device of communication path; and
determining whether the node stores a key taking a node identity of the communication source node in the identity quadruple as index in a case that the communication path role of the node in the current inter-node privacy communication is the first switch device of communication path.

24. The node according to claim 20, wherein the encryption module is further configured for:
sequentially determining, in the sequence of the communication destination node, the last switch device and the first switch device or the sequence of the communication destination node, the first switch device and the last switch device in the identity quadruple, whether the node stores keys taking node identities of the above nodes in the identity quadruple as indexes in a case that the communication path role of the node in the current inter-node privacy communication is the communication source node;
sequentially determining, in the sequence of the communication destination node and the last switch device or the sequence of the last switch device and the communication destination node in the identity quadruple, whether the node stores keys taking node identities of the above nodes in the identity quadruple as indexes in a case that the communication path role of the node in the current inter-node privacy communication is the first switch device of communication path; and
determining whether the node stores a key taking a node identity of the communication destination node in the identity quadruple as index in a case that the communication path role of the node in the current inter-node privacy communication is the last switch device of communication path;
and/or,
the decryption module is further configured for:
sequentially determining, in the sequence of the communication source node, the first switch device and the last switch device or the sequence of the communication source node, the last switch device and the first switch device in the identity quadruple, whether the node stores keys taking node identities of the above nodes in the identity quadruple as indexes in a case that the communication path role of the node in the current inter-node privacy communication is the communication destination node;
sequentially determining, in the sequence of the communication source node and the first switch device or the sequence of the first switch device and the communication source node in the identity quadruple, whether the node stores keys taking node identities of the above nodes in the identity quadruple as indexes in a case that the communication path role of the node in the current inter-node privacy communication is the last switch device of communication path; and
determining whether the node stores a key taking a node identity of the communication source node in the identity quadruple as index in a case that the communication path role of the node in the current inter-node privacy communication is the first switch device of communication path.

25. The node according to any one of claims 19 to 24, wherein the node identity comprises a medium access control address of the node.
